# EUROPEAN PATENT APPLICATION

(11) **EP 4 797 116 A1**
(43) Date of publication of application: **26.08.2026**
(21) Application number: 24883870.8
(22) Date of filing: 20.05.2024
(51) Int. Cl.: G06F 16/2455

(54) **DATA QUERY METHOD AND RELATED APPARATUS**

(30) Priority: 30.10.2023 CN 202311426946; 29.12.2023 CN 202311861516
(71) Applicant: Huawei Cloud Computing Technologies Co., Ltd., Gui'an New District, Guizhou 550025 (CN)
(72) Inventor: CONG, Guanglin, Guiyang, Guizhou 550025 (CN); XU, Ran, Guiyang, Guizhou 550025 (CN); LI, Weiqi, Guiyang, Guizhou 550025 (CN); HU, Feiran, Guiyang, Guizhou 550025 (CN); LIU, Jing, Guiyang, Guizhou 550025 (CN)
(74) Representative: Goddar, Heinz J.
(86) International application number: PCT/CN2024/094293
(87) International publication number: WO 2025/091857

(57) **Abstract**

A data query method and a related apparatus are provided, and belong to the field of cloud computing. The data query method includes: providing a data query interface; obtaining an aggregation query task from the data query interface, where the aggregation query task is used to query for a total amount of data that meets a query condition; and displaying, **in** the data query interface, a first estimated query result of the aggregation query task, where the first estimated query result includes a first total amount of data that meets the query condition and that is obtained through approximate estimation based on a first partial exact query result. According to a method of estimating a population based on a sample, the total amount of data that meets the query condition is approximately estimated, enabling a query result to be quickly obtained, so that a user can obtain available data **in** short time.

## Description

This application claims priorities to Chinese Patent Application No. 202311426946.X, filed on October 30, 2023 and entitled "DATA QUERY METHOD AND APPARATUS, AND COMPUTE DEVICE CLUSTER", and to Chinese Patent Application No. 202311861516.0, filed on December 29, 2023 and entitled "DATA QUERY METHOD AND RELATED APPARATUS", both of which are incorporated herein by reference in their entireties.

### TECHNICAL FIELD

This application relates to the field of cloud computing, and in particular, to a data query method and a related apparatus.

### BACKGROUND

With continuous development of information technologies, computer devices are inevitably used in operations of various industries, and generated related data is correspondingly stored. In addition, currently, an amount of data in different industries and for different users continues to grow with service expansion. In practice, inspection personnel and O&M personnel sometimes need to query massive data spanning several months or even one year for target data. Faced with such massive data, how to efficiently locate target data while minimizing query costs is an urgent problem to be resolved.

### SUMMARY

This application provides a data query method and a related apparatus, to quickly find target data and reduce query costs as much as possible. The technical solutions are as follows.

According to a first aspect, a data query method is provided. The method includes: providing a data query interface, where the data query interface is configured to obtain a query task input by a user; obtaining an aggregation query task from the data query interface, where the aggregation query task is used to query for a total amount of data that meets a query condition, and the query condition includes a query word and a query time range; and displaying a first estimated query result of the aggregation query task in the data query interface, where the first estimated query result includes a first total amount of data that meets the query condition and that is obtained through approximate estimation based on a first partial exact query result, the first partial exact query result includes an amount of data that is found from M data blocks and that meets the query condition, the M data blocks are sampled from N data blocks that match the aggregation query task, M and N are integers, and M is less than N.

For the aggregation query task, approximate estimation is performed based on a partial exact query result to obtain a query result that meets the query condition, and the estimated query result is displayed in the data query interface. In comparison with a complete exact query result, approximate estimation is performed based on the partial exact query result, so that the user can be quickly responded to help the user quickly learn of a trend of the query result, and overheads can be reduced. In other words, according to a method of estimating a population based on a sample, the total amount of data that meets the query condition is approximately estimated based on the first partial exact query result, to quickly obtain a query result, so that the user can obtain available data in short time.

Optionally, before the displaying the first estimated query result of the aggregation query task in the data query interface, the method further includes: displaying a second estimated query result of the aggregation query task in the data query interface, where the second estimated query result includes a second total amount of data that meets the query condition and that is obtained through approximate estimation based on a second partial exact query result, the second partial exact query result includes an amount of data that is found from P data blocks and that meets the query condition, the P data blocks are sampled from the N data blocks that match the aggregation query task, and the M data blocks include the P data blocks; and the displaying the first estimated query result of the aggregation query task in the data query interface includes: replacing the second estimated query result with the first estimated query result in the data query interface.

For the aggregation query task, a complete exact query result may be obtained by performing a plurality of exact queries. In this case, the first partial exact query result is a result obtained by performing first i exact queries in the plurality of exact queries, and the second partial exact query result is a result obtained by performing first i-1 exact queries in the plurality of exact queries. There is a newly added exact query result in each query. In each query, approximate estimation is performed, based on all currently obtained exact query results, on an amount of data that meets the query condition, and a result is displayed in the data query interface. In this way, a quantity of exact query results is gradually increased, so that an approximate estimation result is more accurate.

Optionally, before the replacing the second estimated query result with the first estimated query result in the data query interface, the method further includes: determining a newly added sampled data block; querying the newly added sampled data block based on the query condition, to determine a newly added query result, where the newly added query result includes an amount of data that is found from the newly added sampled data block and that meets the query condition; and determining the first partial exact query result based on the newly added query result and the second partial exact query result.

Each data block includes a plurality of pieces of data content, and each piece of data content corresponds to data generation time. Therefore, when the newly added sampled data block in the i^{th} exact query is queried, all data content in each data block may be traversed. When a piece of data content includes the query word, and data generation time of the data content is in the query time range, it is determined that the data content is data that meets the query condition. In this case, an amount of all data that meets the query condition and that is in the newly added sampled data block in the i^{th} exact query can be obtained. After the amount of data that meets the query condition and that is in the newly added sampled data block in the i^{th} exact query is obtained, amounts of data that meets the query condition and that is in newly added sampled data blocks in the first i exact queries are summed up, to obtain an amount of data that meets the query condition and that is in the M data blocks. A sum of amounts of data that meets the query condition and that is in newly added sampled data blocks in first i-1 exact queries is an amount of data that meets the query condition and that is in the P data blocks.

Optionally, the method further includes: displaying a complete exact query result of the aggregation query task in the data query interface, where the complete exact query result includes a total amount of data that is found from the N data blocks and that meets the query condition.

For the aggregation query task, a total amount of data that meets the query condition is approximately estimated in each query based on a partial exact query result. A complete exact query result may be obtained through a plurality of iterations, so that the data query interface can progressively display increasingly exact results to the user.

Optionally, the first estimated query result further includes the first data statistics chart, and the first data statistics chart indicates distribution of the first total amount of data in different time intervals.

The first data statistics chart is displayed in the data query interface, so that a time-based distribution status of an amount of data that meets the query condition can be intuitively displayed to the user, so that the user can further understand the amount of data that meets the query condition, to bring comfortable experience to the user.

Optionally, the method further includes: displaying a query progress of the aggregation query task in the data query interface.

Optionally, the method further includes: determining, from a target database based on the query condition and an index directory of the target database, the N data blocks that match the aggregation query task.

By using the index directory, the N data blocks that match the aggregation query task can be efficiently selected, and then the selected N data blocks are scanned to obtain data content that meets the query condition, without traversing all data in the target database. This can improve data query efficiency, and reduce consumption of processing resources of the cloud platform.

In some cases, it may take long time to determine the first partial exact query result. To quickly respond to the user, after the aggregation query task is obtained, rough query may be first performed on the target database based on the query condition to obtain a rough query result, where the rough query result includes an amount of data that meets the query condition and that is obtained by performing rough query on the target database. In this case, before the first estimated query result is displayed, the rough query result may be first displayed in the data query interface.

Because the rough query is performed quickly, the rough query result can be quickly obtained, and the rough query result is displayed in the data query interface, so that the user can quickly view the query result and quickly have a general understanding of the amount of data that meets the query condition. In addition, in the foregoing aggregation query, a rough query and a plurality of exact queries are designed, and an exact query result is obtained through a plurality of iterations, so that the data query interface can not only quickly display the rough query result to the user, but also progressively display increasingly exact results to the user. In this way, the user can further obtain available data in short time.

According to a second aspect, another data query method is provided. The method includes: providing a data query interface, where the data query interface is configured to obtain a query task input by a user; obtaining a content query task from the data query interface, where the content query task is used to query for target data content that meets a query condition, and the query condition includes a query word and a query time range; and performing a first query operation based on the query condition and a single query result return condition, and displaying, in the data query interface, first data content obtained by performing the first query operation, where the single query result return condition includes a single maximum query amount of data and a single maximum query delay, the first query operation is used to query for a part of the target data content, a query delay of the first query operation is not greater than the single maximum query delay, and an amount of data of the first data content is not greater than the single maximum query amount of data.

The single maximum query amount of data in the single query result return condition is a maximum amount of data content that meets the query condition during each query operation.

The single maximum query delay in the single query result return condition is maximum query time for each query operation. When time for each query operation reaches the single maximum query delay, the query stops.

When there is a large amount of data in the target database, it may take long time to find data content that meets the query condition and that is with the single maximum query amount. A query result is fed back to the user only when an amount of found data reaches the single maximum query amount, or when all the data has been traversed, and consequently, user experience may be greatly degraded. However, with the existence of the single maximum query delay, response time of each query operation can be controlled within specific duration, so that the cloud platform can feed back a current query status of the content query task to the user in a timely manner. In this way, the user can learn of a current query result in a timely manner, and impact of an excessively large amount of data on user experience is reduced.

Optionally, performing the first query operation based on the query condition and the single query result return condition, and displaying, in the data query interface, the first data content obtained by performing the first query operation includes: performing the first query operation based on the query condition and the single query result return condition; and when any one of a plurality of target conditions is first met, ending the first query operation, and displaying, in the data query interface, the first data content obtained by performing the first query operation, where the plurality of target conditions include that the query delay of the first query operation reaches the single maximum query delay, the amount of data found by performing the first query operation reaches the single maximum query amount of data, and query for the target data content has been completed through the first query operation.

For the content query task, all the target data content can be found only after a plurality of query operations are performed. In this case, the first query operation may be any query operation. Certainly, the cloud platform may alternatively find all the target data content by performing a single query operation. In this case, the single query operation is considered as the first query operation.

Optionally, performing the first query operation based on the query condition and the single query result return condition, and displaying, in the data query interface, the first data content obtained by performing the first query operation includes: determining an estimated total query delay of the content query task; decomposing the content query task into a plurality of ordered subtasks based on the query condition, the estimated total query delay, and the single maximum query delay, where each subtask is used to query for a part of the target data content, and an estimated query delay of each subtask does not exceed the single maximum query delay; executing at least one subtask to perform the first query operation; and when any one of a plurality of target conditions is first met, ending the first query operation, and displaying, in the data query interface, the first data content obtained by performing the first query operation, where the plurality of target conditions include that the query delay of the first query operation reaches the single maximum query delay, the amount of data of the first data content reaches the single maximum query amount of data, and a target subtask is completed, where the target subtask is a last subtask in the plurality of subtasks, or when the target subtask is completed, a sum of the query delay of the first query operation and an estimated query delay of a next subtask of the target subtask is greater than the single maximum query delay.

Optionally, after the first query operation is ended, the method further includes: recording a pause location of the content query task; displaying a target query option in the data query interface, where the target query option indicates to continue to query for data content; and after a trigger operation performed by the user on the target query option is received, performing a second query operation based on the pause location.

Optionally, after the first query operation is ended, the method further includes: determining a query progress of the content query task; and displaying the query progress of the content query task in the data query interface. In this way, the user can obtain a completion status of the current content query task in a timely manner, so that the user ends the task in advance based on a requirement, to save time and reduce overheads.

Optionally, the method further includes: obtaining a context query task that is triggered by the user and that is about reference data content, where the context query task is used to query for target context data content that meets a context query condition, the context query condition includes a preceding context time range, a subsequent context time range, and a query statement, and the reference data content is any piece of data content displayed in the data query interface; and performing a first preceding context query operation and a first subsequent context query operation based on the context query condition and the single query result return condition, and displaying, in the data query interface, first preceding context data content obtained by performing the first preceding context query operation and first subsequent context data content obtained by performing the first subsequent context query operation, where the first preceding context query operation and the first subsequent context query operation each are used to query for a part of the target context data content, both a query delay of the first preceding context query operation and a query delay of the first subsequent context query operation are not greater than the single maximum query delay, and both an amount of data of the first preceding context data content and an amount of data of the first subsequent context data content are not greater than the single maximum query amount of data.

After the foregoing content query task is performed, the user may trigger a context query task about a piece of data content displayed in the data query interface. In this case, the method further includes the foregoing content.

Optionally, the single maximum query amount of data and/or the single maximum query delay are/is input by the user in the data query interface.

For the content query task and the context query task, the single maximum query delay is set, so that time for returning a result of each query operation can be controlled within specific duration; and the single query result return condition is set, so that the cloud platform can return a part of ordered results in a timely manner in various cases. In this way, user experience is improved. The target query option provided in the data query interface allows the user to query for more data after obtaining a current result, so as to ensure that the user can obtain needed data content. In addition, a current task query progress is displayed in the data query interface. This helps the user learn of a current query status of the content query task, and helps the user determine, based on a requirement, whether to end the content query task, to save time and reduce overheads.

According to a third aspect, a data query apparatus is provided. The data query apparatus has a function of implementing behavior of the data query method according to the first aspect. The data query apparatus includes at least one module, and the at least one module is configured to implement the data query method according to the first aspect.

According to a fourth aspect, another data query apparatus is provided. The data query apparatus has a function of implementing behavior of the data query method according to the second aspect. The data query apparatus includes at least one module, and the at least one module is configured to implement the data query method according to the second aspect.

According to a fifth aspect, a computer device cluster is provided. The computer device cluster includes at least one computer device, each computer device includes a processor and a memory, and a processor of the at least one computer device is configured to execute instructions stored in a memory of the at least one compute device, to implement the method according to the first aspect and/or the second aspect.

Optionally, the computer device cluster may further include a communications bus, and the communications bus is configured to establish a connection between the processor and the memory of the at least one computer device.

According to a sixth aspect, a computer-readable storage medium is provided. The storage medium stores instructions, and when the instructions are executed by a compute device cluster, the computer device cluster performs steps of the data query method according to the first aspect and/or the second aspect.

According to a seventh aspect, a computer program product including instructions is provided. When the instructions are run by a computer device cluster, the computer device cluster is caused to perform steps of the data query method according to the first aspect and/or the second aspect. In other words, a computer program is provided. When the computer program is run on a computer, the computer is caused to perform steps of the data query method according to the first aspect and/or the second aspect.

Technical effects obtained in the third aspect and the fourth aspect are respectively similar to the technical effects obtained by corresponding technical means in the first aspect and the second aspect, and technical effects obtained in the fifth aspect, the sixth aspect, and the seventh aspect are similar to technical effects obtained by corresponding technical means in the first aspect and/or the second aspect. Details are not described herein again.

### BRIEF DESCRIPTION OF DRAWINGS

FIG. 1 is a flowchart of a data query method according to an embodiment of this application;
FIG. 2 is a diagram of a data query interface including an execution result of an aggregation query task according to an embodiment of this application;
FIG. 3 is a diagram of an approximate estimation method according to an embodiment of this application;
FIG. 4 is a diagram of another data query interface including an execution result of an aggregation query task according to an embodiment of this application;
FIG. 5 is a flowchart of another data query method according to an embodiment of this application;
FIG. 6 is a diagram of a data query interface including an execution result of a content query task according to an embodiment of this application;
FIG. 7 is a diagram of another data query interface including an execution result of a content query task according to an embodiment of this application;
FIG. 8 is a diagram of a data query interface including an execution result of a context query task according to an embodiment of this application;
FIG. 9 is a diagram of a structure of a data query apparatus according to an embodiment of this application;
FIG. 10 is a diagram of a structure of another data query apparatus according to an embodiment of this application;
FIG. 11 is a diagram of a structure of a computer device according to an embodiment of this application;
FIG. 12 is a diagram of a structure of a computer device cluster according to an embodiment of this application; and
FIG. 13 is a diagram in which one or more computer devices in a computer device cluster are connected via a network according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a data query method provided in embodiments of this application is described in detail, an application scenario in embodiments of this application is first described.

With continuous development of information technologies, computer devices are inevitably used in the work of various industries, and generated related data is also correspondingly stored. In addition, currently, an amount of data related to users in the industries is continuously increased with service expansion. In actual life, inspection personnel and O&M personnel sometimes need to query massive data within several months or even one year for target data. For example, for log data, during routine inspection, the inspection personnel sometimes find that an error occurs in a log. Because the inspection personnel may not know a time interval in which the error occurs, the inspection personnel may need to traverse log data in a long time range to obtain detailed data related to the error log, so as to analyze a root cause of the error. Alternatively, sometimes, statistics on access traffic of an internet protocol (internet protocol, IP) address within a period of time needs to be collected by using log data. Because such a log is usually a high-frequency log (namely, a log with a high occurrence frequency), a considerable amount of log data may need to be traversed to obtain the access traffic of the IP address within the period of time. For such massive data, how to quickly find target data and reduce query costs as much as possible is an urgent problem to be resolved.

A related technology provides two data query methods. A first method is to query data by setting a maximum amount of data to be queried. To be specific, in a data query process, if it is found through traversal that an amount of data that meets a query condition reaches the maximum amount of data to be queried, a query result is returned; or if it is found through traversal that an amount of data that meets a query condition does not reach the maximum amount of data to be queried, traversal is continuously performed, and a query result is returned until the maximum amount of data to be queried is reached, or a query result is returned when the amount of data that meets the query condition does not reach the maximum amount of data to be queried but all data has been traversed. A second method is to query data by setting a maximum query delay. To be specific, in a data query process, if a query delay reaches the maximum query delay, a query result is returned; or if a query delay does not reach the maximum query delay, traversal continues to be performed.

In the first method, a query result may be inaccurate. In addition, in this solution, a query result may be returned after long time, resulting in poor user experience. Further, in an application scenario in which data is strongly time-ordered, for example, context query, a large amount of data may be traversed in order for a quantity of returned query results to reach the maximum amount of data to be queried. Overheads of this product are usually calculated based on an amount of traversed data. However, in most cases, a user can find one or several pieces of needed data by using only a part of data that meets the query condition. In other words, this solution implicitly increases query costs of the user. In the second method, the maximum query delay is set to control query time. When the query times out, the query is terminated. However, in a scenario with massive data, this solution may fail to obtain a query result.

In view of this, embodiments of this application provide a data query method. In the method provided in embodiments of this application, a task of collecting statistics on non-detailed data content like access traffic of an IP address is referred to as an aggregation query task, and a task of querying detailed content data like log content is referred to as a content query task. For the aggregation query task, in embodiments of this application, approximate estimation is performed based on a partial exact query result to obtain a query result that meets the query condition, and the estimated query result is displayed in a data query interface. In comparison with a complete exact query result, approximate estimation is performed based on the partial exact query result, so that the user can be quickly responded to help the user quickly learn of a trend of the query result, and overheads can be reduced. For the content query task, a query operation is performed by setting a single query result return condition, where a query delay of the query operation is not greater than a single maximum query delay included in the single query result return condition, and an amount of data of data content obtained by performing the query operation is not greater than a single maximum query amount of data included in the single query result return condition; and a pause location is further recorded and a target query option is provided, where the target query option indicates to continue to query for data content. In this way, after the query operation is performed, the data content obtained by performing the query operation can be displayed in the data query interface in a timely manner. In this way, the task can be ended in advance after the user obtains a desired query result based on the data content obtained by performing the query operation, to save time and reduce overheads. In addition, the user can initiate a plurality of queries by using the target query option, to ensure that data content needed by the user can be obtained.

The data query method provided in embodiments of this application may be performed by a cloud platform or an electronic device that has a data query function. The cloud platform may be a server cluster, a distributed system, or the like that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform, or may be a cloud computing service center.

The following describes in detail the data query method provided in embodiments of this application. For ease of description, the following describes the data query method provided in embodiments of this application by using the cloud platform as an execution entity. In addition, it should be noted that, in the data query method provided in embodiments of this application, a type of data to be queried is not limited, and may be a log, an image, a document, or the like.

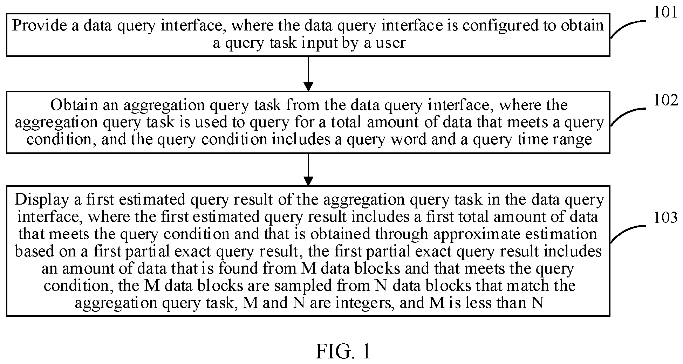

FIG. 1 is a flowchart of a data query method according to an embodiment of this application. Refer to FIG. 1. The method includes the following steps.

**Step 101:** Provide a data query interface, where the data query interface is configured to obtain a query task input by a user.

The data query interface may include a plurality of different areas, and the plurality of areas are respectively used to trigger different query tasks. Certainly, the data query interface may alternatively include a plurality of independent sub-interfaces, and the plurality of sub-interfaces are respectively configured to trigger different query tasks. This is not limited in this embodiment of this application.

Each query task has a corresponding target database. The target database is one or more databases that need to be currently queried by the user. The one or more databases are usually stored on a cloud platform. A type of data stored in the one or more databases is not limited in this embodiment of this application. A data block is used as a minimum operation unit for data stored in the target database. Each data block has a corresponding time range, and the time range is a data generation time range of data stored in the data block.

In some embodiments, the target database is selected by the user. A manner in which the user selects the target database is not limited in this embodiment of this application. For example, a data query interface provided by the cloud platform includes a database selection area, and the user may select the target database based on the database selection area. Certainly, the database selection area may alternatively be an independent sub-interface in the data query interface, or an interface independent of the data query interface. Alternatively, the cloud platform provides an instruction input window, and the user may input a related instruction in the instruction input window to select the target database.

**Step 102:** Obtain an aggregation query task from the data query interface, where the aggregation query task is used to query for a total amount of data that meets a query condition, and the query condition includes a query word and a query time range.

The aggregation query task is a task of collecting statistics on an amount of data that meets the query condition in the target database. For example, statistics are collected on an amount of data of all content that includes a character "life" in the target database, and statistics are collected on a quantity of times that a user A accesses a website B on November 1, 2023.

The data query interface may include a plurality of different areas, and the plurality of areas are respectively used to obtain different query parameters (for example, the query word and the query time range) in the query condition of the aggregation query task. Certainly, the data query interface may alternatively include a plurality of independent sub-interfaces, and the plurality of sub-interfaces are respectively configured to obtain different query parameters in the query condition of the aggregation query task. This is not limited in this embodiment of this application.

The query word may vary depending on different application scenarios and a type of data queried by using the aggregation query task. For example, if a reason why a customer fails to pay for a takeout order needs to be queried currently, and the type of data queried by using the aggregation query task is a log, the query word may be an IP address of an electronic device used by the customer to pay for the takeout order, so that log content within a time period in which the customer pays for the takeout order can be found, to analyze the reason why the payment fails. For another example, if statistics on a quantity of errors reported by a service platform on a current day needs to be collected currently, and the type of data queried by using the aggregation query task is a log, the query word may be error, so that a number of all error logs reported by the service platform on the current day can be determined.

The query word may be a single query word or a combination of a plurality of query words. For example, if a quantity of errors reported by a server on a current day needs to be queried for, the query word may be a combination of an IP address of the server and error. The query word may be input by the user in the data query interface, or may be selected by the user from a plurality of query words provided in the data query interface, or may be obtained in another manner.

The query time range is determined based on time information input or selected by the user in the data query interface. The time information input or selected by the user in the data query interface may be a relative time length, or may be an absolute time range. This is not limited in this embodiment of this application.

The relative time length is a time length to a start moment of a query operation, the query time range is a time range from a relative moment to the start moment of the query operation, and the relative moment is a moment that is earlier than the start moment of the query operation by the relative time length. For example, if the relative time length is 1 hour, and the start moment of the query operation is 20:30 on November 23, 2023, the relative moment is 19:30 on November 23, 2023, and the query time range is from 19:30 on November 23, 2023 to 20:30 on November 23, 2023. The absolute time range is a time range from a first absolute moment to a second absolute moment, and both the first absolute moment and the second absolute moment are moments input or selected by the user.

The relative time length may be input by the user in the data query interface, or may be selected by the user from a plurality of relative time lengths provided in the data query interface. For example, the data query interface provides a relative duration menu, and the relative duration menu includes a plurality of relative time lengths. The user may select a relative time length based on a time range needed for the aggregation query task for query.

The first absolute moment and the second absolute moment may be input by the user in the data query interface, or may be selected by the user from absolute moments provided in the data query interface. For example, the data query interface further includes an absolute time input box, and the user may directly input the first absolute moment and the second absolute moment into the absolute time input box; or the data query interface further includes an absolute time calendar page, and the user may select the first absolute moment and the second absolute moment based on the absolute time calendar page.

Certainly, the foregoing is merely an example. In actual application, the data query interface may alternatively provide another type of operation area for the user to input or select the relative time length, the first absolute moment, and the second absolute moment. This is not limited in this embodiment of this application.

The cloud platform may immediately execute the aggregation query task after obtaining the aggregation query task through the data query interface. Alternatively, the cloud platform may execute the aggregation query task when determining, in first duration after obtaining the aggregation query task, that the user does not modify the query condition. Certainly, the cloud platform may alternatively execute the aggregation query task when receiving a query instruction delivered by the user. A value of the first duration may be set based on an actual application scenario. The first duration may be preset by the cloud platform, or may be set by the user. Neither the value nor the setting manner of the first duration is limited in this embodiment of this application. The user delivers the query instruction in a plurality of manners. For example, when the cloud platform provides an instruction input window, the user may deliver the query instruction through the instruction input window. When the data query interface further includes a query analysis key, the user may tap/click the query analysis key to deliver the query instruction. A manner of delivering the query instruction by the user is not limited in this embodiment of this application.

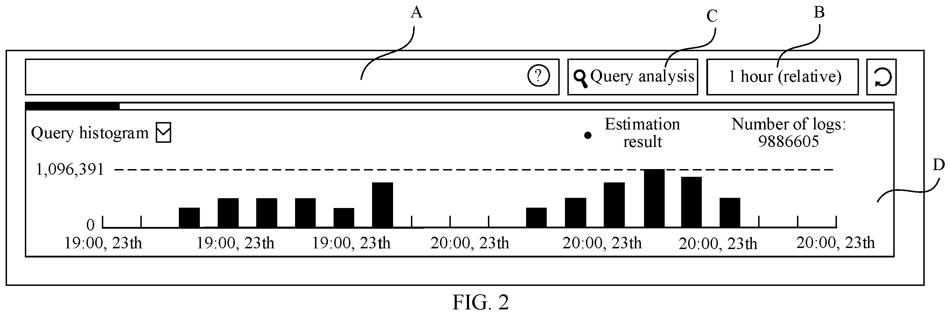

For example, the data query interface is shown in FIG. 2. An area A indicates the user to input a query word. An area B indicates the user to select a relative time length. An area C is a query analysis key used to deliver a query instruction. An area D is used to display a query result.

**Step 103:** Display a first estimated query result of the aggregation query task in the data query interface, where the first estimated query result includes a first total amount of data that meets the query condition and that is obtained through approximate estimation based on a first partial exact query result, the first partial exact query result includes an amount of data that is found from M data blocks and that meets the query condition, the M data blocks are sampled from N data blocks that match the aggregation query task, M and N are integers, and M is less than N.

In some embodiments, the first estimated query result of the aggregation query task may be determined according to the following steps (1) to (3).
(1) Sample the M data blocks from the N data blocks that match the aggregation query task.

For the aggregation query task, the cloud platform may obtain a complete exact query result by performing a plurality of exact queries. In this case, the first partial exact query result may be a result obtained by performing first i exact queries in the plurality of exact queries. Certainly, the cloud platform may not need to obtain the complete exact query result, and only needs to approximately estimate a query result by performing one exact query. In this case, the first partial exact query result is a result obtained by performing the exact query. In different cases, implementations of sampling the M data blocks from the N data blocks are different. Therefore, the following separately describes the implementations.

**In a first case,** the cloud platform obtains the complete exact query result by performing a plurality of exact queries, and the first partial exact query result is a result obtained by performing first i exact queries in the plurality of exact queries. In this case, a newly added sampled data block in an i^{th} exact query is determined from the N data blocks, and the newly added sampled data block in the i^{th} exact query and P data blocks are determined as the M data blocks. The P data blocks are a sum of newly added sampled data blocks in first i-1 queries.

In some embodiments, the newly added sampled data block in the i^{th} exact query may be determined from the N data blocks by using any sampling algorithm. The sampling algorithm may be a uniform sampling algorithm, an exponential sampling algorithm, or the like. In actual application, an appropriate sampling algorithm may be selected based on a requirement. This is not limited in this embodiment of this application. For example, if overall performance is not expected to be affected, uniform sampling may be performed, so that quantities of newly added sampled data blocks in all exact queries are the same. However, in this case, it may take slightly longer time to obtain the complete exact query result. If slight impact on overall performance is not an issue, exponential sampling may be performed, so that a quantity of newly added sampled data blocks in each exact query increases explosively, and the complete exact query result can be quickly obtained.

In some embodiments, the sampling algorithm may be selected by the user. For example, when an algorithm selection menu is provided in the data query interface, the user may select a sampling algorithm from the algorithm selection menu, and the cloud platform may determine the newly added sampled data block in the i^{th} exact query by using the sampling algorithm selected by the user.

**In a second case,** the cloud platform approximately estimates a query result by performing one exact query, and the first partial exact query result is a result obtained by performing the exact query. In this case, a part of data blocks is sampled from the N data blocks, and the part of sampled data blocks is determined as the M data blocks.

In some embodiments, a part of data blocks may be sampled from the N data blocks by using any sampling algorithm, for example, a part of data blocks is randomly selected. This is not limited in this embodiment of this application.

In some embodiments, before the M data blocks are sampled from the N data blocks that match the aggregation query task, the N data blocks may be first determined from the target database.

The target database usually includes a plurality of data blocks, each data block includes a plurality of pieces of data content, each piece of data content corresponds to data generation time, and a content digest and a data generation time range of each data block are usually recorded in an index directory of the target database. Therefore, the N data blocks that match the aggregation query task may be determined from the target database based on the index directory of the target database and the query condition, data content stored in each of the N data blocks matches the query word, and data generation time of the data content stored in each data block matches the query time range. In other words, content digests of the data content stored in the N data blocks match the query word, and data generation time ranges of the data content stored in the N data blocks at least overlap the query time range.

The foregoing index directory is a structure for sorting values of one or more columns in a database (where the database is usually stored in a tabular format). For each database, an index directory corresponding to the database may be established, and the index directory may be used to quickly access specific information in the database. For example, a query task is to search a database D for data content whose identity (Identity, ID) is 44. If there is no index directory, the entire database needs to be traversed until a row whose ID is 44 is found. If there is an index directory and the index directory is created for an ID column, the index directory may be directly searched for 44 to obtain a location of the row, that is, the row is found, and the data content whose ID is 44 may be obtained.

By using the index directory, the N data blocks that match the aggregation query task can be efficiently selected, and then the selected N data blocks are scanned to obtain data content that meets the query condition, without traversing all data in the target database. This can improve data query efficiency, and reduce consumption of processing resources of the cloud platform.

(2) Determine the first partial exact query result, where the first partial exact query result includes an amount of data that is found from the M data blocks and that meets the query condition.

Based on the foregoing descriptions, for the aggregation query task, the cloud platform may obtain a complete exact query result by performing a plurality of exact queries. In this case, the first partial exact query result is a result obtained by performing first i exact queries in the plurality of exact queries. Certainly, the cloud platform may not need to obtain the complete exact query result, and only needs to approximately estimate a query result by performing one exact query. In this case, the first partial exact query result is a result obtained by performing the exact query. In different cases, implementations of determining the first partial exact query result are different. Therefore, the following separately describes the implementations.

**In a first case,** the cloud platform obtains the complete exact query result by performing a plurality of exact queries, and the first partial exact query result is a result obtained by performing first i exact queries in the plurality of exact queries. In this case, the newly added sampled data block in the i^{th} exact query is queried based on the query condition, to determine a newly added query result, where the newly added query result includes an amount of data that is found from the newly added sampled data block and that meets the query condition; and the first partial exact query result is determined based on the newly added query result and a second partial exact query result. The second partial exact query result includes an amount of data that is found from P data blocks and that meets the query condition.

It can be learned from the foregoing descriptions that each data block includes a plurality of pieces of data content, and each piece of data content corresponds to data generation time. Therefore, when the newly added sampled data block in the i^{th} exact query is queried, all data content in each data block may be traversed. When a piece of data content includes the query word, and data generation time of the data content is in the query time range, it is determined that the data content is data that meets the query condition. In this case, an amount of all data that meets the query condition and that is in the newly added sampled data block in the i^{th} exact query can be obtained. After the amount of data that meets the query condition and that is in the newly added sampled data block in the i^{th} exact query is obtained, amounts of data that meets the query condition and that is in newly added sampled data blocks in the first i exact queries are summed up, to obtain an amount of data that meets the query condition and that is in the M data blocks. A sum of amounts of data that meets the query condition and that is in newly added sampled data blocks in first i-1 exact queries is an amount of data that meets the query condition and that is in the P data blocks.

Because each piece of data content in a data block corresponds to data generation time, when the newly added sampled data block is queried based on the query condition, data generation time of data content that meets the query condition and that is in the newly added sampled data block may be further obtained. In this case, the newly added query result further includes the data generation time of the data content that is found from the newly added sampled data block and that meets the query condition. Similarly, the second partial exact query result further includes data generation time of data content that is found from the P data blocks and that meets the query condition. Therefore, the first partial exact query result may further include data generation time of data content that is found from the M data blocks and that meets the query condition.

**In a second case,** the cloud platform approximately estimates a query result by performing one exact query, and the first partial exact query result is a result obtained by performing the exact query. In this case, the M data blocks are queried based on the query condition, to determine the first partial exact query result.

In some embodiments, all data content in the M data blocks is traversed. When a piece of data content includes the query word, and data generation time of the data content is in the query time range, it is determined that the data content is data that meets the query condition. In this case, an amount of all data that meets the query condition and that is in the M data blocks can be obtained.

Because each piece of data content in a data block corresponds to data generation time, when the M data blocks are queried based on the query condition, data generation time of data content that meets the query condition and that is in the M data blocks may be further obtained. Therefore, the first partial exact query result may further include data generation time of data content that is found from the M data blocks and that meets the query condition.

(3) Perform approximate estimation based on the first partial exact query result to obtain the first estimated query result.

Based on the foregoing descriptions, for the aggregation query task, the cloud platform may obtain a complete exact query result by performing a plurality of exact queries. In this case, the first partial exact query result is a result obtained by performing first i exact queries in the plurality of exact queries. Certainly, the cloud platform may not need to obtain the complete exact query result, and only needs to approximately estimate a query result by performing one exact query. In this case, the first partial exact query result is a result obtained by performing the exact query. In addition, the first partial exact query result includes the amount of data that is found from the M data blocks and that meets the query condition. Therefore, in the first case, when the i^{th} exact query is a last query, an amount of data that is found in the first i exact queries and that meets the query condition is a total amount of data that meets the query condition and that is in the N data blocks, namely, the first total amount of data. When the i^{th} exact query is not a last query, approximate estimation may be performed based on the first partial exact query result to obtain a first total amount of data that meets the query condition. In the second case, approximate estimation may be directly performed based on the first partial exact query result to obtain a first total amount of data that meets the query condition.

An implementation process of performing approximate estimation based on the first partial exact query result to obtain the first total amount of data that meets the query condition includes: dividing the amount of data that is found from the M data blocks and that meets the query condition by M, to obtain a first estimated average value; and multiplying the first estimated average value by N, to obtain the total amount of data that meets the query condition and that is in the N data blocks, namely, the first total amount of data.

Certainly, the first total amount of data may alternatively be approximately estimated in another manner. This is not limited in this embodiment of this application.

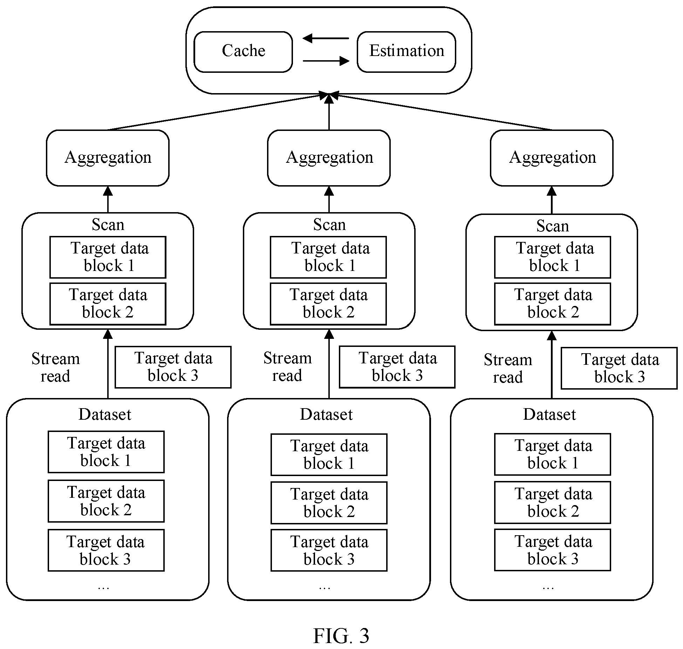

The following describes the foregoing approximate estimation process with reference to FIG. 3. Refer to FIG. 3. It is assumed that there are three datasets in the target database, each dataset has nine data blocks that match the aggregation query task, there are 27 data blocks that match the aggregation query task in total in the three datasets, and data generation time ranges of the three datasets are the same. However, for any dataset, data generation time ranges of all data blocks in the dataset do not overlap. It is assumed that in the current aggregation query task, three data blocks that match the query task are read from each of the three datasets in a streaming manner and are scanned, that is, nine data blocks have been extracted from the 27 data blocks that match the aggregation query task and are scanned, and scanning results are aggregated and cached. Assuming that an amount of data that meets the query condition and that is in each scanned data block is 1000, the amount of data that meets the query condition in the first partial exact query result is 9000. Therefore, the first estimated average value is 9000/9=1000, and a total amount of data that meets the query condition and that is in the 27 data blocks that match the aggregation query task can be estimated as 1000*27=27000, that is, the first total amount of data is approximately estimated as 27000.

In the foregoing method, approximate estimation is performed based on an exact result obtained by scanning a part of data blocks, to obtain a total amount of data that meets the query condition. Because only a part of data blocks is scanned, compared with scanning all data blocks that match the aggregation query task, the foregoing method can greatly shorten query time, so that the user can quickly have a general understanding of the amount of data that meets the query condition.

Based on the foregoing descriptions, the first partial exact query result further includes the data generation time of the data content that meets the query condition and that is in the M data blocks. Therefore, in some embodiments, a first data statistics chart may be further generated based on the data generation time of the data content that meets the query condition and that is in the M data blocks and the amount of data that meets the query condition and that is in the M data blocks. In other words, in addition to the first total amount of data, the first estimated query result further includes the first data statistics chart, and the first data statistics chart indicates distribution of the first total amount of data in different time intervals. The first data statistics chart includes but is not limited to at least one of the following: an interval histogram, a line statistics chart, a sector statistics chart, and the like.

The time intervals in the first data statistics chart may be obtained by dividing the query time range by using a time interval division mechanism. The time interval division mechanism may be preset by the cloud platform, or may be set by the user. For example, the time interval division mechanism preset by the cloud platform is: evenly dividing the query time range into 10 intervals. Alternatively, the data query interface further includes a time interval division mechanism setting area, and the time interval division mechanism set by the user by using the area is: dividing the query time range by 3-minute intervals. Certainly, the two cases are merely examples, and the time interval division mechanism may be set based on an actual application requirement. In addition, it should be noted that a length of each time interval obtained through division is usually not less than a length of a time range corresponding to each data block.

When the first data statistics chart is generated, for the M traversed data blocks, the amount of data that meets the query condition and data generation time of each piece of data content that meets the query condition and that is in the data blocks may be obtained. Therefore, statistics on amounts of data in different time intervals may be directly collected based on the data generation time of the data content that meets the query condition and that is in the data blocks. For a data block that is not traversed in the N data blocks that match the aggregation query task, an amount of data that meets the query condition and that is in each data block may be estimated, and a time range corresponding to each data block may be obtained from metadata corresponding to the data block. The time range is a data generation time range of data content in each data block. Therefore, statistics on amounts of data in different time intervals in the data block that is not traversed can also be collected. Metadata of each data block includes basic information of the data block, for example, a data generation time range of data content in the data block, a type of data included in the data block, an amount of data included in the data block, and the like.

After the first estimated query result is obtained in the foregoing manner, the first estimated query result may be displayed in the data query result. In addition, when the first estimated query result includes the first data statistics chart, the first data statistics chart is displayed in the data query interface, so that time-based distribution of an amount of data that meets the query condition can be intuitively displayed to the user, and the user can further understand the amount of data that meets the query condition and have comfortable experience.

When the first partial exact query result is a result obtained by performing the first i exact queries in the plurality of exact queries, before the first estimated query result is displayed in the data query interface, a second estimated query result of the aggregation query task may be further displayed in the data query interface, where the second estimated query result includes a second total amount of data that meets the query condition and that is obtained through approximate estimation based on a second partial exact query result, the second partial exact query result includes an amount of data that is found from P data blocks and that meets the query condition, the P data blocks are sampled from the N data blocks that match the aggregation query task, and the M data blocks include the P data blocks. In this case, when the first estimated query result of the aggregation query task is displayed in the data query interface, the second estimated query result displayed in the data query interface may be replaced with the first estimated query result.

A process of determining the second partial exact query result and a process of performing approximate estimation based on the second partial exact query result to obtain the second total amount of data that meets the query condition are similar to the foregoing process of determining the first partial exact query result and the process of performing approximate estimation based on the first partial exact query result to obtain the first total amount of data that meets the query condition. Details are not described herein again.

Similarly, in some embodiments, in addition to the second total amount of data, the second estimated query result further includes a second data statistics chart, and the second data statistics chart indicates distribution of the second total amount of data in different time intervals. A manner of determining the second data statistics chart is similar to the foregoing manner of determining the first data statistics chart. Details are not described herein again.

In conclusion, for the aggregation query task, after the N data blocks that match the aggregation query task are determined, a plurality of rounds of sampling may be performed on the N data blocks. There is a newly added exact query result in each round. In each round, approximate estimation is performed, based on all currently obtained exact query results, on an amount of data that meets the query condition, and a result is displayed in the data query interface. In this way, a quantity of exact query results is gradually increased, so that an approximate estimation result is more accurate.

In some embodiments, when the first estimated query result is displayed, a query progress of the aggregation query task may be further displayed in the data query interface. For example, M is divided by N to obtain the query progress of the aggregation query task.

The query progress of the aggregation query task is displayed in the data query interface, so that the user can clearly learn of a query status of the current task. In this way, the user can control the query task in a timely manner, and the task can be ended in advance when a desired result is obtained, to avoid excessive overheads.

In some embodiments, when the first estimated query result of the aggregation query task is displayed in the data query interface, a first query result description may be further displayed in the data query interface. The first query result description may be "the current result is an estimated result", or the like, to prompt the user that the query result currently displayed in the data query interface is an estimated result rather than an exact result.

Still using the foregoing example, refer to FIG. 2. A query result displayed in FIG. 2 is the first estimated query result. In this case, the N data blocks that match the aggregation query task are not completely traversed, the query result is an approximate estimation result, a progress shown by a query progress bar is about 10%, the first total amount of data is 9886605, the first data statistics chart corresponding to the first total amount of data is an interval histogram in FIG. 2, and the interval histogram shows time-based distribution of the first total amount of data at an interval of 3 minutes.

In some embodiments, the data query interface further provides a pause key and a continue key. In this case, if the user determines, based on a requirement, that a more accurate query result is no longer needed after viewing a query result in a query, the user may trigger a task pause operation by using the pause key, and the cloud platform does not perform a next query in response to the task pause operation triggered by the user. If the user determines, based on a requirement, that a more accurate query result is needed after viewing a query result in a query, the user may trigger a task continuation operation by using the continue key, and the cloud platform performs a next query in response to the task continuation operation triggered by the user. Certainly, in some other embodiments, after a query result in a query is displayed in the data query interface, the cloud platform may directly perform a next query.

In some embodiments, a complete exact query result of the aggregation query task may be further displayed in the data query interface. The complete exact query result includes the total amount of data that is found from the N data blocks and that meets the query condition. In this case, all the N data blocks that match the aggregation query task have been traversed.

In some embodiments, when the complete exact query result is displayed, a second query result description is further displayed in the data query interface. The second query result description may be "the current result is an exact result", or the like, to prompt the user that the query result currently displayed in the data query interface is an accurate query result.

Similarly, in some embodiments, when the complete exact query result is displayed, a third data statistics chart may be further displayed in the data query interface. The third data statistics chart indicates distribution, in different time intervals, of the total amount of data that meets the query condition and that is in the N data blocks. A manner of determining the third data statistics chart is similar to the manner of determining the first data statistics chart and the manner of determining the second data statistics chart. Details are not described herein again.

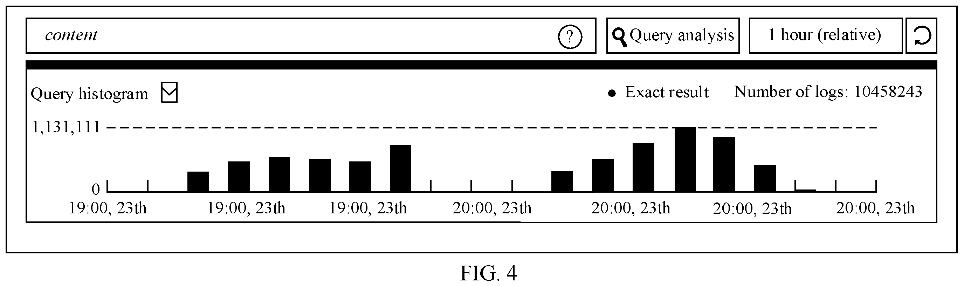

Still using the foregoing example, refer to FIG. 4. A query result displayed in FIG. 4 is the complete exact query result, a current task query progress is 100%, all the N data blocks that match the aggregation query task have been traversed, the total amount of data that meets the query condition is 10458243, and the third data statistics chart corresponding to the total amount is an interval histogram in FIG. 4.

In some cases, it may take long time to determine the first partial exact query result. To quickly respond to the user, after the aggregation query task is obtained, rough query may be first performed on the target database based on the query condition to obtain a rough query result, where the rough query result includes an amount of data that meets the query condition and that is obtained by performing rough query on the target database. In this case, before the first estimated query result is displayed, the rough query result may be first displayed in the data query interface.

The rough query on the target database may be implemented by using a HyperLogLog (HyperLogLog) algorithm, or may be implemented by using a pre-aggregation algorithm, or may be implemented by using another similar algorithm, provided that a rough query result can be quickly obtained. This is not limited in this embodiment of this application.

Optionally, the rough query result may further include a rough data statistics chart, and the rough data statistics chart indicates distribution, in different time intervals, of an amount of data that meets the query condition and that is obtained by performing rough query on the target database.

Because the rough query is performed quickly, the rough query result can be quickly obtained, and the rough query result is displayed in the data query interface, so that the user can quickly view the query result and quickly have a general understanding of the amount of data that meets the query condition.

In some embodiments, the data query interface further provides a pause key and a continue key. In this case, if the user only needs to learn of the rough query result, after viewing the rough query result, the user may trigger a task pause operation by using the pause key, and the cloud platform does not perform a subsequent step in response to the task pause operation triggered by the user. If the user determines, based on a current application scenario after viewing the rough query result, that an accurate query result is still needed, the user may trigger a task continuation operation by using the continue key, and the cloud platform performs a subsequent step in response to the task continuation operation triggered by the user.

Certainly, in some other embodiments, after the rough query result is displayed in the data query interface, the cloud platform may directly perform a subsequent step; or after duration of displaying the rough query result in the data query interface reaches second duration, the cloud platform automatically performs a plurality of exact queries on the target database. A value of the second duration may be set based on an actual application scenario. The second duration may be preset by the cloud platform, or may be set by the user. Neither the value nor the setting manner of the second duration is limited in this embodiment of this application.

In some embodiments, the data query interface further displays a third query result description, for example, "the current result is a rough query result", to prompt the user that the query result currently displayed in the data query interface is a rough query result.

Because the aggregation query task does not require high accuracy of the query result, but requires high efficiency of feeding back the query result to the user, for the aggregation query task, according to a method of estimating a population based on a sample, a total amount of data that meets the query condition is approximately estimated in each query based on a partial exact query result. A complete exact query result may be obtained through a plurality of iterations, so that the data query interface can progressively display increasingly exact results to the user. In addition, only a part of data blocks needs to be traversed in each query, and therefore, response time in each query is very short. In this way, the user can obtain available data in short time. In addition, a current task query progress is displayed in the data query interface. This helps the user obtain a completion status of the current query task. In addition, the user triggers the task pause operation in various manners, so that after a query, the user can end the query task in a timely manner based on a data accuracy requirement in an actual application, to shorten query time and reduce query costs. In addition, in the foregoing aggregation query, a rough query and a plurality of exact queries are designed, and an exact query result is obtained through a plurality of iterations, so that the data query interface can not only quickly display the rough query result to the user, but also progressively display increasingly exact results to the user. In this way, the user can further obtain available data in short time.

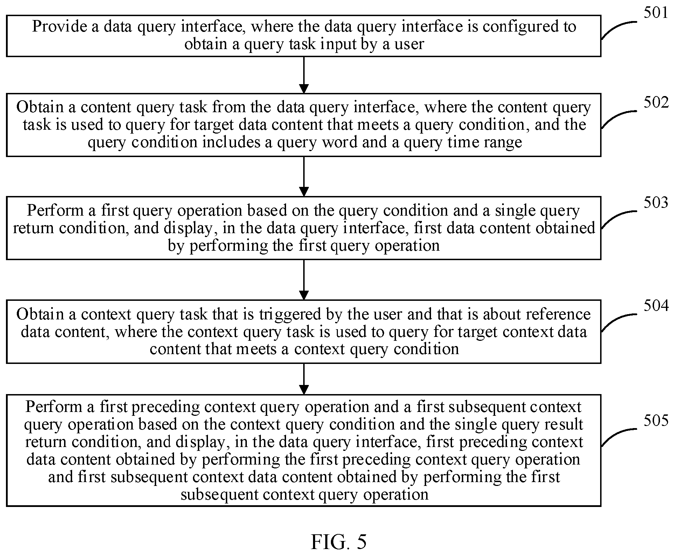

FIG. 5 is a flowchart of another data query method according to an embodiment of this application. Refer to FIG. 5. The method includes the following steps.

**Step 501:** Provide a data query interface, where the data query interface is configured to obtain a query task input by a user.

This step is the same as the content in step 101. For detailed implementation content, refer to the foregoing descriptions. Details are not described herein again.

**Step 502:** Obtain a content query task from the data query interface, where the content query task is used to query for target data content that meets a query condition, and the query condition includes a query word and a query time range.

The content query task is a task of querying for detailed content data such as log content. For example, if all error logs in a target database need to be searched for and error causes need to be analyzed, the query task is a content query task, and content of the error logs needs to be displayed in the data query interface, so that the user can analyze the error causes.

It should be noted that data that needs to be queried by using the content query task is strongly time-ordered. In other words, the data that needs to be queried by using the content query task is sequentially sorted based on a sequence of data generation time. For a plurality of pieces of data with same data generation time, the plurality of pieces of data are sorted based on a storage sequence of the plurality of pieces of data for scanning.

The target data content is all data content that is in the target database and that meets the query condition.

A manner of obtaining the query condition of the content query task is similar to the foregoing manner of obtaining the query condition of the aggregation query task. For detailed implementation content, refer to the foregoing descriptions. Details are not described herein again.

A cloud platform may immediately execute the content query task after obtaining the content query task through the data query interface. Alternatively, the cloud platform may execute the content query task when determining, in third duration after obtaining the content query task, that the user does not modify the query condition. Certainly, the cloud platform may alternatively execute the content query task when receiving a query instruction triggered by the user. A value of the third duration may be set based on an actual application scenario. The third duration may be preset by the cloud platform, or may be set by the user. Neither the value nor the setting manner of the third duration is limited in this embodiment of this application. The user triggers the query instruction in a plurality of manners. For example, when the cloud platform provides an instruction input window, the user may deliver the query instruction through the instruction input window. When the data query interface further includes a query analysis key, the user may tap/click the query analysis key to deliver the query instruction. A manner of delivering the query instruction by the user is not limited in this embodiment of this application.

**Step 503:** Perform a first query operation based on the query condition and a single query result return condition, and display, in the data query interface, first data content obtained by performing the first query operation, where the single query result return condition includes a single maximum query amount of data and a single maximum query delay, the first query operation is used to query for a part of the target data content, a query delay of the first query operation is not greater than the single maximum query delay, and an amount of data of the first data content is not greater than the single maximum query amount of data.

In the content query task, with the existence of the single query result return condition, only a part of data content that meets the query condition, that is, a part of the target data content, can be found by performing only one query operation. If all data content that meets the query condition needs to be found, a plurality of query operations usually need to be performed.

The single maximum query amount of data in the single query result return condition is a maximum amount of data content that meets the query condition during each query operation. It can be learned from the foregoing descriptions that the data that needs to be queried by using the content query task is sequential. Therefore, the data needs to be sequentially traversed forward or backward during each query operation. When an amount of data that is in the data scanned during each query operation and that meets the query condition reaches the single maximum query amount of data, data scanning stops.

The single maximum query delay in the single query result return condition is maximum query time for each query operation. When time for each query operation reaches the single maximum query delay, the query stops.

When there is a large amount of data in the target database, it may take long time to find data content that meets the query condition and that is with the single maximum query amount. A query result is fed back to the user only when an amount of found data reaches the single maximum query amount, or when all the data has been traversed, and consequently, user experience may be greatly degraded. However, with the existence of the single maximum query delay, response time of each query operation can be controlled within specific duration, so that the cloud platform can feed back a current query status of the content query task to the user in a timely manner. In this way, the user can learn of a current query result in a timely manner, and impact of an excessively large amount of data on user experience is reduced.

Based on the foregoing descriptions, the cloud platform usually finds all the target data content by performing a plurality of query operations. In this case, the first query operation may be any query operation. If the first query operation is a 1st query operation, the first query operation is to query for the data content forward or backward in a time sequence starting from earliest time or latest time of the query time range of the content query task; or if the first query operation is not a 1st query operation, the first query operation is to start query from a pause location of a previous query operation. Certainly, the cloud platform may alternatively find all the target data content by performing a single query operation. In this case, the single query operation is considered as the first query operation, and the first query operation is also to query for the data content forward or backward in a time sequence starting from earliest time or latest time of the query time range of the content query task.

In some embodiments, an implementation process of performing the first query operation based on the query condition and the single query result return condition, and displaying, in the data query interface, the first data content obtained by performing the first query operation includes: performing the first query operation based on the query condition and the single query result return condition; and when any one of a plurality of target conditions is first met, ending the first query operation, and displaying, in the data query interface, the first data content obtained by performing the first query operation, where the plurality of target conditions include that the query delay of the first query operation reaches the single maximum query delay, the amount of data found by performing the first query operation reaches the single maximum query amount of data, and query for the target data content has been completed through the first query operation.

In other words, the first query operation is ended if the target data content is not completely queried for by using the first query operation, the amount of data found by performing the first query operation does not reach the single maximum query amount of data, but the query delay of the first query operation has reached the single maximum query delay, or the target data content is not completely queried for by using the first query operation, the query delay of the first query operation does not reach the single maximum query delay, but the amount of data found by performing the first query operation has reached the single maximum query amount of data. If the query delay of the first query operation does not reach the single maximum query delay, the amount of data found by performing the first query operation also does not reach the single maximum query amount of data, but a last piece of data that needs to be scanned in a time sequence is found through the first query operation, it indicates that the query for the target data content is completed, and in this case, the first query operation is also ended.

In some embodiments, when receiving a first query request triggered by the user, the cloud platform performs the first query operation. A manner in which the user triggers a query request may be pressing Enter, or may be tapping/clicking a query key when the data query interface includes the query key, or may be another manner. This is not limited in this embodiment of this application.

In some other embodiments, the first query operation is performed when it is detected that the query condition is not updated within fourth duration. The fourth duration may be preset by the cloud platform, or may be set by the user. A value of the fourth duration may be set based on an actual application requirement. Neither the value nor the setting manner of the fourth duration is limited in this embodiment of this application.

In some embodiments, if the first query operation is a 1st query operation, when the first query operation is performed, Q data blocks that are in the target database and that match the content query task are first determined. In this case, each query operation is to scan the Q data blocks instead of scanning all data blocks in the query time range. In this way, an amount of data scanned by using the content query task one by one can be reduced, query time can be shortened, and a query result can be returned more quickly. A manner of determining the Q data blocks is similar to the manner of determining the N data blocks that match the aggregation query task in step 103. Details are not described herein again.

In some other embodiments, the content query task may be first decomposed to obtain a plurality of subtasks. In this case, that the first query operation is performed based on the query condition and the single query result return condition, and the first data content obtained by performing the first query operation is displayed in the data query interface includes the following steps (1) to (4).
(1) Determine an estimated total query delay of the content query task.

In some embodiments, an amount of data in the query time range, namely, an amount of pre-query data, is determined based on metadata of a data block in the query time range in the target database, and the estimated total query delay is determined based on the amount of pre-query data.

The estimated total query delay is time needed for scanning data with the amount of pre-query data one by one. When the estimated total query delay is determined, the estimated total query delay may be obtained by multiplying average time needed for scanning one piece of data by the amount of pre-query data. The average time needed for scanning one piece of data may be estimated by the cloud platform based on a current available processing resource amount. Certainly, the estimated total query delay may alternatively be determined in another manner. This is not limited in this embodiment of this application.

(2) Decompose the content query task into a plurality of ordered subtasks based on the query condition, the estimated total query delay, and the single maximum query delay, where each subtask is used to query for a part of the target data content, and an estimated query delay of each subtask does not exceed the single maximum query delay.

In some embodiments, when the content query task is decomposed, all data blocks in the query time range are decomposed in a time sequence based on a task decomposition mechanism, to obtain groups of data blocks. Data included in each group of data blocks is data that needs to be queried by using each subtask. In this way, a plurality of subtasks are obtained.

The task decomposition mechanism may be preset by the cloud platform, or may be set by the user. For example, the task decomposition mechanism preset by the cloud platform is: making an estimated query delay of each subtask be half of the single maximum query delay. In this case, it is assumed that when the content query task is decomposed, a single total query delay is divided by half of the single maximum query delay, to obtain a quantity n of the plurality of subtasks, and the data blocks in the query time range are sequentially and evenly decomposed into n groups in a time sequence, where one group of data blocks corresponds to one subtask. Certainly, this case is merely an example. In actual application, the task decomposition mechanism may be set based on a requirement.

It should be noted that data that needs to be queried by using each subtask is still strongly time-ordered. In other words, the data that needs to be queried by using each subtask is sequentially sorted based on a sequence of data generation time. For a plurality of pieces of data with same data generation time, the plurality of pieces of data are sorted based on a storage sequence of the plurality of pieces of data for scanning.

(3) Execute at least one subtask to perform the first query operation.

Based on the foregoing descriptions, after the content query task is decomposed, the plurality of ordered subtasks may be obtained, and each subtask corresponds to a part of data blocks. Therefore, if the first query operation is a 1st query operation, scanning starts from a data block corresponding to a 1^{st} subtask; or if the first query operation is not a 1st query operation, scanning starts from a pause location of a previous query operation.

In a process of scanning data content in a data block, for a piece of scanned data content, if the data content includes the query word and data generation time of the data content is in the query time range, it is determined that the data content is data that meets the query condition. In this manner, a data block corresponding to the at least one subtask is queried, to obtain the first data content obtained by performing the first query operation.

(4) When any one of a plurality of target conditions is first met, end the first query operation, and display, in the data query interface, the first data content obtained by performing the first query operation, where the plurality of target conditions include that the query delay of the first query operation reaches the single maximum query delay, the amount of data of the first data content reaches the single maximum query amount of data, and a target subtask is completed, where the target subtask is a last subtask in the plurality of subtasks, or when the target subtask is completed, a sum of the query delay of the first query operation and an estimated query delay of a next subtask of the target subtask is greater than the single maximum query delay.

In other words, when a j^{th} subtask in the plurality of subtasks is executed by using the first query operation, the first query operation is ended in the following three cases:

**In a first case,** the first query operation is ended if the j^{th} subtask is not completed, but the query delay of the first query operation has reached the single maximum query delay, or the j^{th} subtask is not completed, the query delay of the first query operation does not reach the single maximum query delay, but the amount of data found by performing the first query operation has reached the single maximum query amount of data.

**In a second case,** the first query operation is ended if the j^{th} subtask is completed, the query delay of the first query operation does not reach the single maximum query delay, the amount of data found by performing the first query operation does not reach the single maximum query amount of data, but the j^{th} subtask is a last subtask.

In this case, all the target data content has been found.

**In a third case,** if the j^{th} subtask is completed, but the query delay of the first query operation does not reach the single maximum query delay, the amount of data found by performing the first query operation does not reach the single maximum query amount of data, and the j^{th} subtask is not a last subtask, it is determined whether a sum of the query delay of the first query operation and an estimated query delay of a next subtask is greater than the single maximum query delay when the j^{th} subtask is completed; and if a sum of the query delay of the first query operation and an estimated query delay of a (j+1)^{th} subtask is greater than the single maximum query delay, the first query operation is ended; otherwise, the (j+1)^{th} subtask is executed. In a process of executing the (j+1)^{th} subtask, determining is also performed according to the foregoing logic, and the first query operation is ended when a case is met.

The estimated query delay of the next subtask may be determined in this manner. To be specific, a quantity of data blocks corresponding to the next subtask is divided by a quantity of data blocks corresponding to the completed j^{th} subtask, and an obtained result is multiplied by a query delay of completing the j^{th} subtask, to obtain the estimated query delay of the next subtask. Certainly, the estimated query delay of the next subtask may alternatively be determined in another manner. This is not limited in this embodiment of this application.

In some embodiments, after the first query operation is ended, a pause location of the content query task is recorded; a target query option is displayed in the data query interface, where the target query option indicates to continue to query for data content; and after a trigger operation performed by the user on the target query option is received, a second query operation is performed based on the pause location. The second query operation is a next query operation of the first query operation.

It should be noted that, after the second query operation is ended, data content obtained by performing the second query operation is also displayed in the data query interface, but the data content does not cover the first data content obtained by performing the first query operation.

In other words, the user can determine, based on a query result of a query operation displayed in the data query interface, whether to continue a next query operation. If the next query operation needs to be performed, the user can initiate the next query operation by performing the trigger operation on the target query option. If the next query operation does not need to be performed, the user may not trigger the target query option, so that the content query task is ended in advance, to save time and reduce overheads.

In some embodiments, after the first query operation is ended, a query progress of the content query task is determined; and the query progress of the content query task is displayed in the data query interface. In this way, the user can obtain a completion status of the current content query task in a timely manner, so that the user ends the task in advance based on a requirement, to save time and reduce overheads.

A manner of determining the query progress of the content query task may be: dividing an amount of data that is in the target database and that has been scanned in a time range by an amount of all data in the query time range in the target database, and using an obtained result as the query progress of the content query task. Certainly, the query progress of the content query task may alternatively be determined in another manner. This is not limited in this embodiment of this application.

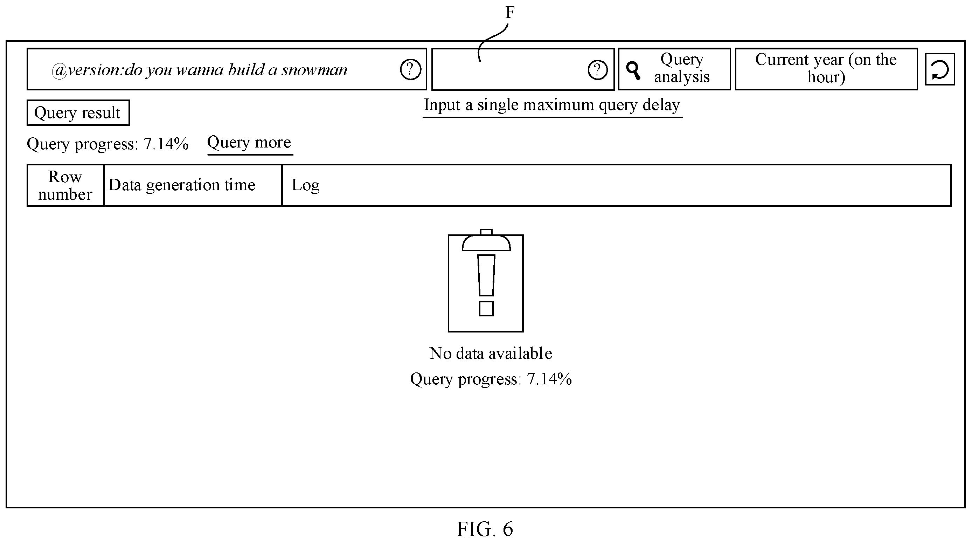

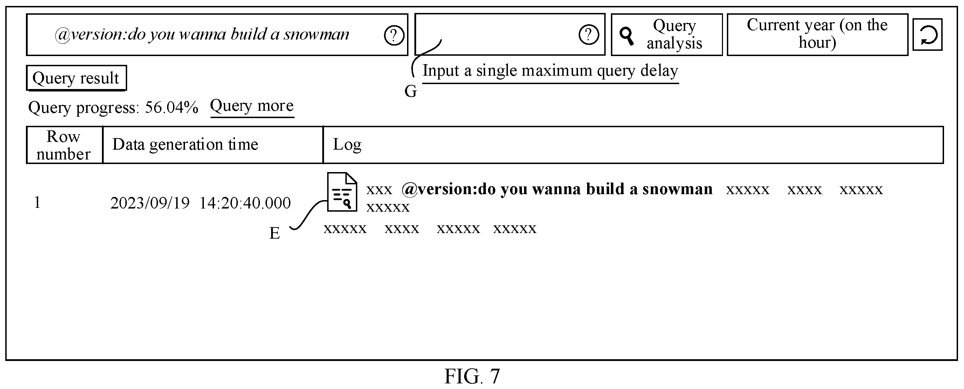

For example, refer to FIG. 6. It is assumed that a query word of a content query task is @version:do you wanna build a snowman, and a query time range is one year (on the hour) (that is, from 00:00 on January 1 of a current year to a start moment of the task). FIG. 6 is a data query interface after a query operation is ended. It can be learned from FIG. 6 that a query progress of the current task is 7.14%. Because no data content that meets the query condition is found currently, no data content appears in the data query interface, and "No table data" and "Query progress 7.14%" are displayed. After obtaining a current query result, the user wants to query for more data content, and therefore taps/clicks a target query option, namely, "Query more" with an underline in FIG. 6. The cloud platform responds to the operation and continues to query for more data content. A data query interface after a next query operation is ended is shown in FIG. 7. As shown in FIG. 7, the query progress of the current content query task is 56.04%, and a piece of data content that meets the query condition is found, a row number of the data content is 1, and data generation time is 14:20:40 on September 19, 2023.

It should be noted that, before a 1^{st} query operation is performed, the content query task may be decomposed to obtain a plurality of subtasks. Subsequently, after each query operation is ended, a query start location of a next query operation is a pause location of the previous query operation. Certainly, before the 1^{st} query operation, the content query task may be decomposed to obtain a plurality of subtasks. Subsequently, after each query operation is ended, the remaining part of the content query task is decomposed again to obtain a plurality of subtasks again, and then execution starts from a 1^{st} subtask. Subsequent steps are still the same as the foregoing steps (3) and (4).

After the data content is queried for and displayed by performing the foregoing steps, the user may trigger a context query task about a piece of data content. In this case, the method further includes the following steps.

**Step 504:** Obtain a context query task about reference data content, where the context query task is used to query for target context data content that meets a context query condition, the context query condition includes a preceding context time range, a subsequent context time range, and a query statement, and the reference data content is any piece of data content displayed in the data query interface.

After the data content that meets the query condition is found by using the content query task, the user may select one piece of data content from the data content displayed in the data query interface as the reference data content, and then trigger a context query task about the reference data content. Certainly, the reference data content may alternatively be any piece of data content displayed in the data query interface, and may not be data content obtained through querying by using the foregoing content query task.

In some embodiments, the context query task about the reference data content may be triggered by the user in a plurality of manners. For example, refer to FIG. 7. The user may tap/click a detail viewing area before a piece of data content, namely, an area E in FIG. 7, to use data content whose row number is 1 in FIG. 7 as reference data content, so as to trigger a context query task about the reference data content.

A definition of the query statement is similar to that of the foregoing query word. Details are not described herein again. In addition, the query statement is usually a statement in data content that needs to be queried for. If the reference data content is a piece of data content found by using the foregoing content query task, the query statement of the context query task is usually different from the query word of the content query task.

The context query task includes a preceding context query task and a subsequent context query task. The preceding context query task is used to query for data content whose data generation time is earlier than data generation time of the reference data content and that meets the context query condition. The subsequent context query task is used to query for data content whose data generation time is later than the data generation time of the reference data content and that meets the context query condition.

Regardless of whether the reference data content is data content found by using the content query task or other data content, when the preceding context time range is determined based on data generation time of the reference data content, a first time range may be used as the preceding context time range, where the first time range is a time range from earliest data generation time in the target database to the data generation time of the reference data content. When the reference data content is data content found by using the content query task, a second time range may also be used as the preceding context time range, where the second time range is a time range from earliest time of the query time range in the query condition to the data generation time of the reference data content.

Similarly, regardless of whether the reference data content is data content found by using the content query task or other data content, when the subsequent context time range is determined based on data generation time of the reference data content, a third time range may be used as the subsequent context time range, where the third time range is a time range from the data generation time of the reference data content to latest data generation time in the target database. When the reference data content is data content found by using the content query task, a fourth time range may also be used as the subsequent context time range, where the fourth time range is a time range from the data generation time of the reference data content to latest time of the query time range in the query condition.

**Step 505:** Perform a first preceding context query operation and a first subsequent context query operation based on the context query condition and the single query result return condition, and display, in the data query interface, first preceding context data content obtained by performing the first preceding context query operation and first subsequent context data content obtained by performing the first subsequent context query operation, where the first preceding context query operation and the first subsequent context query operation each are used to query for a part of the target context data content, both a query delay of the first preceding context query operation and a query delay of the first subsequent context query operation are not greater than the single maximum query delay, and both an amount of data of the first preceding context data content and an amount of data of the first subsequent context data content are not greater than the single maximum query amount of data.

An implementation process of the preceding context query task and an implementation process of the subsequent context query task are similar to the implementation process of the foregoing content query task. Similarly, a process of performing the first preceding context query operation and a process of performing the first subsequent context query operation are similar to the foregoing process of performing the first query operation. Details are not described herein again. Because the implementation process of the preceding context query task is similar to the implementation process of the subsequent context query task, the preceding context query task is used as an example for brief description below.

In some embodiments, the first preceding context query operation is performed based on the query statement, the preceding context time range, and the single query result return condition, and the first preceding context data content obtained by performing the first preceding context query operation is displayed in the data query interface.

In an example, the first preceding context query operation is performed based on the query statement, the preceding context time range, and the single query result return condition; and when any one of a plurality of target conditions is first met, the first preceding context query operation is ended, and the first preceding context data content obtained by performing the first preceding context query operation is displayed in the data query interface, where the plurality of target conditions include that the query delay of the first preceding context query operation reaches the single maximum query delay, the amount of data found by performing the first preceding context query operation reaches the single maximum query amount of data, and query for target preceding context data content in the target context data content has been completed through the first preceding context query operation.

In another example, the preceding context query task may be first decomposed to obtain a plurality of preceding context subtasks. In this case, the first preceding context query operation is performed based on the query statement, the preceding context time range, and the single query result return condition, and the first preceding context data content obtained by performing the first preceding context query operation is displayed in the data query interface, including the following steps (1) to (4):
(1) Determine an estimated preceding context total query delay of the preceding context query task.

A method for determining the estimated preceding context total query delay is similar to the method for determining the estimated total query delay in step 503. Details are not described herein again.

(2) Decompose the preceding context query task into a plurality of ordered preceding context subtasks based on the query statement, the preceding context time range, the estimated preceding context total query delay, and the single maximum query delay, where each preceding context subtask is used to query for a part of the target preceding context data content, and an estimated query delay of each preceding context subtask does not exceed the single maximum query delay.

The target preceding context data content is data content that is in the target context data content and whose data generation time is earlier than the data generation time of the reference data content.

Similarly, for a manner of obtaining the plurality of ordered preceding context subtasks through decomposition, refer to the manner of obtaining the plurality of ordered subtasks through decomposition in step 503.

(3) Execute at least one preceding context subtask to perform the first preceding context query operation.

(4) When any one of a plurality of target conditions is first met, end the first preceding context query operation, and display, in the data query interface, the first preceding context data content obtained by performing the first preceding context query operation, where the plurality of target conditions include that the query delay of the first preceding context query operation reaches the single maximum query delay, the amount of data of the first preceding context data content reaches the single maximum query amount of data, and a target preceding context subtask is completed, where the target preceding context subtask is a last subtask in the plurality of preceding context subtasks, or when the target preceding context subtask is completed, a sum of the query delay of the first preceding context query operation and an estimated preceding context query delay of a next preceding context subtask of the target preceding context subtask is greater than the single maximum query delay.

For descriptions of a case of ending the first preceding context query operation, refer to the descriptions of the case of ending the first query operation in step 503. Details are not described herein again.

Similarly, before a 1^{st} preceding context query operation is performed, the preceding context query task may be decomposed to obtain a plurality of preceding context subtasks. After each preceding context query operation is ended subsequently, a query start location of a next preceding context query operation is a pause location of the previous preceding context query operation. Certainly, before the 1^{st} preceding context query operation, the preceding context query task may be decomposed to obtain a plurality of preceding context subtasks. After each subsequent preceding context query operation is ended, the remaining part of the preceding context query task is decomposed again to obtain a plurality of preceding context subtasks again, and then execution starts from a 1^{st} preceding context subtask. Subsequent steps are still the same as the foregoing steps (3) and (4).

In some embodiments, after the first preceding context query operation is ended, a pause location of the preceding context query task is recorded; a target preceding context query option is displayed in the data query interface, where the target preceding context query option indicates to continue to query for preceding context data content; and after a trigger operation performed by the user on the target preceding context query option is received, a second preceding context query operation is performed based on the pause location. The second preceding context query operation is a next preceding context query operation of the first preceding context query operation.

In other words, the user can determine, based on a current query result of a preceding context query task displayed in the data query interface, whether to continue a next preceding context query operation. If the next preceding context query operation needs to be performed, the user can initiate the next preceding context query operation by performing the trigger operation on the target preceding context query option. If the next preceding context query operation does not need to be performed, the user may not trigger the target preceding context query option, so that the preceding context query task is ended in advance, to save time and reduce overheads.

The following still uses the preceding context query task as an example for description.

In some embodiments, when a first query request triggered by the user is received, the first preceding context query operation is performed. A manner in which the user triggers a first preceding context query request may be pressing Enter, or may be tapping/clicking a query key when the data query interface includes the query key, or may be another manner. This is not limited in this embodiment of this application.

In some other embodiments, the first preceding context query operation is performed when it is detected that the query condition is not updated within fifth duration. The fifth duration may be preset by the cloud platform, or may be set by the user. A value of the fifth duration may be set based on an actual application requirement. Neither the value nor the setting manner of the fifth duration is limited in this embodiment of this application.

In some embodiments, after the first preceding context query operation is ended, a query progress of the preceding context query task is determined; and the query progress of the preceding context query task is displayed in the data query interface. In this way, the user can obtain a completion status of the current preceding context query task in a timely manner, so that the user ends the task in advance based on a requirement, to save time and reduce overheads.

A manner of determining the query progress of the preceding context query task may be: dividing an amount of data that is in the target database and that has been scanned in a preceding context time range by an amount of all data in the preceding context time range in the target database, so that an obtained result is the query progress of the preceding context query task. Certainly, the query progress of the preceding context query task may alternatively be determined in another manner. This is not limited in this embodiment of this application.

In some embodiments, after the first preceding context query operation is ended, data generation time of a last piece of data currently scanned by using the preceding context query task is recorded, where the data generation time is a time location currently scanned by using the preceding context query task, and the time location currently scanned by using the preceding context query task is displayed in the data query interface.

The user may learn, based on the time location obtained through current scanning, of a time range in which current scanning has been completed. Before starting a task, the user usually can roughly learn of a time range of to-be-obtained data. If the user determines that no content needs to be queried for in a time range in which scanning is not performed, the user may terminate the query in advance, to avoid overheads caused by meaningless scan.

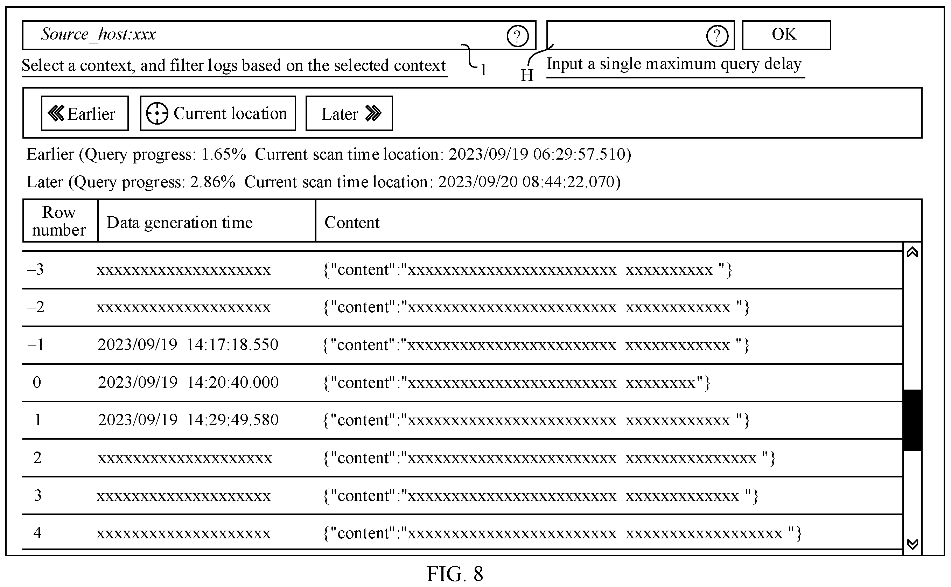

For example, refer to FIG. 7. FIG. 7 is a current data query interface of a content query task. It is assumed that data content whose row number is 1 shown in FIG. 7 is selected as reference data content, context query is performed on the reference data content, and an area E in FIG. 7 is tapped/clicked to trigger a context query task about the reference data content. Then, refer to FIG. 8. An area 1 in FIG. 8 indicates the user to select a context, that is, indicates the user to input a query statement of the triggered context query task. The query statement of the context query task is "Source_host:xxx". A preceding context time range is from earliest data generation time in the target database to data generation time of the reference data content, and a subsequent context time range is from the data generation time of the reference data content to latest data generation time in the target database. After inputting the query statement and selecting the preceding context time range and the subsequent context time range, the user taps/clicks an "OK" key to trigger a context query request, and the cloud platform simultaneously executes the preceding context query task and the subsequent context query task. In FIG. 8, an "Earlier" key and an "Update" key are respectively a target preceding context query option and a target subsequent context query option. The "Earlier" key and the "Update" key are tapped/clicked, so that the cloud platform can continue to query for more preceding context data content and subsequent context data content based on a pause location.

FIG. 8 is a data query interface of a triggered context query task after a query operation is ended. It can be learned from FIG. 8 that, a current query progress of the preceding context query task is 1.65%, a current scanned time location is 06:29:57.510 on September 19, 2023, a current query progress of the subsequent context query task is 2.86%, and a current scanned time location is 08:44:22.070 on September 20, 2023. Data content found by using the preceding context query task is displayed above the reference data content, for example, data content whose row number is -1 and data generation time is 14:17:18.550 on September 19, 2023 in FIG. 8. Data content found by using the subsequent context query task is displayed below the reference data content, for example, data content whose row number is 1 and data generation time is 14:29:49.580 on September 19, 2023 in FIG. 8.

In some embodiments, when the query task is a content query task and/or a context query task, the single maximum query amount of data and/or the single maximum query delay are/is input by the user in the data query interface. If the user wants to view each query result quickly, the user may set a small single maximum query amount of data and a low single maximum query delay. A value of the single maximum query amount of data and a value of the single maximum query delay may be adjusted based on an actual requirement. Setting manners and the values of the single maximum query amount of data and the single maximum query delay are not limited in this embodiment of this application. For example, as shown in an area F in FIG. 6, an area G in FIG. 7, and an area H in FIG. 8, the data query interface further provides an area for inputting a single maximum query delay, and the user may input the single maximum query delay in the area.

In some embodiments, when the query task is a content query task and/or a context query task, the plurality of target conditions further include that an amount of data scanned by using a query operation reaches a single maximum scanning amount, where the single maximum scanning amount is a maximum amount of data traversed during each query operation. The single maximum scanning amount may be preset by the cloud platform, or may be set by the user.

A related data query product is usually charged based on an amount of data scanned by the cloud platform. Therefore, the user is allowed to set the single maximum scanning amount, so that the user can control query costs from the bottom layer, to reduce overheads.

In the content query task and the context query task, the single maximum query delay is set, so that time for returning a result of each query operation can be controlled within specific duration; and the single query result return condition is set, so that the cloud platform can return a part of ordered results in a timely manner in various cases. In this way, user experience is improved. The target query option, the target preceding context query option, and the target subsequent context query option provided in the data query interface allow the user to query for more data after obtaining a current result, so as to ensure that the user can obtain needed data content. A related data query product is usually charged based on an amount of data scanned by the cloud platform. Therefore, the single maximum scanning amount is set, so that the user can control query costs from the bottom layer, to reduce overheads. In addition, a current task query progress and a time location currently scanned are displayed in the data query interface. This helps the user learn of a current query status of the context query task, and helps the user determine, based on a requirement, whether to end the context query task, to save time and reduce overheads.

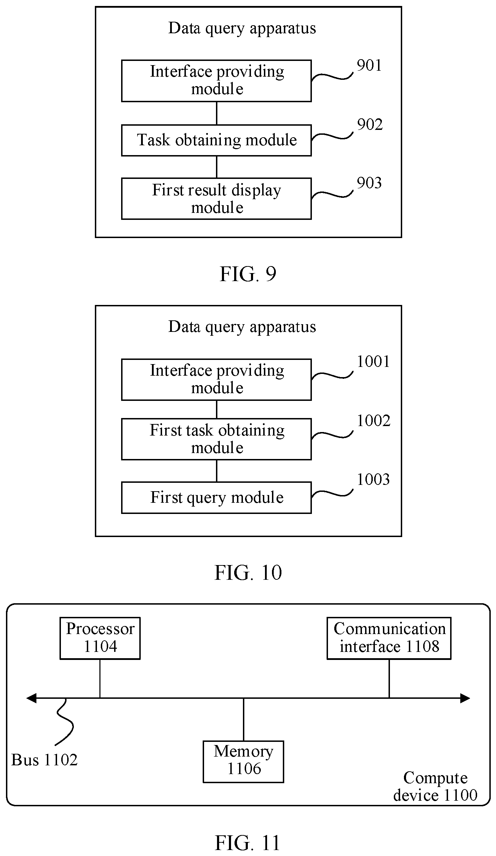

FIG. 9 is a diagram of a structure of a data query apparatus according to an embodiment of this application. Refer to FIG. 9. The apparatus includes an interface providing module 901, a task obtaining module 902, and a first result display module 903.

The interface providing module 901 is configured to provide a data query interface, where the data query interface is configured to obtain a query task input by a user.

The task obtaining module 902 is configured to obtain an aggregation query task from the data query interface, where the aggregation query task is used to query for a total amount of data that meets a query condition, and the query condition includes a query word and a query time range.

The first result display module 903 is configured to display a first estimated query result of the aggregation query task in the data query interface, where the first estimated query result includes a first total amount of data that meets the query condition and that is obtained through approximate estimation based on a first partial exact query result, the first partial exact query result includes an amount of data that is found from M data blocks and that meets the query condition, the M data blocks are sampled from N data blocks that match the aggregation query task, M and N are integers, and M is less than N.

Optionally, the apparatus further includes:
a second result display module, configured to display a second estimated query result of the aggregation query task in the data query interface, where the second estimated query result includes a second total amount of data that meets the query condition and that is obtained through approximate estimation based on a second partial exact query result, the second partial exact query result includes an amount of data that is found from P data blocks and that meets the query condition, the P data blocks are sampled from the N data blocks that match the aggregation query task, and the M data blocks include the P data blocks; and
In this case, the first result display module is specifically configured to:
   replace the second estimated query result with the first estimated query result in the data query interface.

Optionally, the apparatus further includes:
a first determining module, configured to determine a newly added sampled data block;
a query module, configured to query the newly added sampled data block based on the query condition, to determine a newly added query result, where the newly added query result includes an amount of data that is found from the newly added sampled data block and that meets the query condition; and
a second determining module, configured to determine the first partial exact query result based on the newly added query result and the second partial exact query result.

Optionally, the apparatus further includes:
a complete result display module, configured to display a complete exact query result of the aggregation query task in the data query interface, where the complete exact query result includes a total amount of data that is found from the N data blocks and that meets the query condition.

Optionally, the first estimated query result further includes the first data statistics chart, and the first data statistics chart indicates distribution of the first total amount of data in different time intervals.

Optionally, the apparatus further includes:
a progress display module, configured to display a query progress of the aggregation query task in the data query interface.

Optionally, the apparatus further includes:
a third determining module, configured to determine, from a target database based on the query condition and an index directory of the target database, the N data blocks that match the aggregation query task.

The foregoing modules may be implemented by software, or may be implemented by hardware. For example, the following uses the interface providing module as an example to describe an implementation of the interface providing module. Similarly, for an implementation of the foregoing another module, refer to the implementation of the interface providing module.

The module is used as an example of a software functional unit, and the interface providing module may include code running on a computing instance. The computing instance may include at least one of a physical host (compute device), a virtual machine, and a container. Further, there may be one or more computing instances. For example, the interface providing module may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The module is used as an example of a hardware functional unit, and the interface providing module may include at least one compute device like a server. Alternatively, the interface providing module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The plurality of compute devices included in the interface providing module may be distributed in a same region, or may be distributed in different regions. The plurality of compute devices included in the interface providing module may be distributed in a same AZ, or may be distributed in different AZs. Similarly, the plurality of compute devices included in the interface module may be distributed on a same VPC, or may be distributed on a plurality of VPCs. The plurality of compute devices may be any combination of compute devices such as a server, an ASIC, a PLD, a CPLD, an FPGA, and GAL.

In embodiments of this application, for the aggregation query task, according to a method of estimating a population based on a sample, a total amount of data that meets the query condition is approximately estimated in each query based on a partial exact query result. A complete exact query result may be obtained through a plurality of iterations, so that the data query interface can progressively display increasingly exact results to the user. In addition, only a part of data blocks needs to be traversed in each query, and therefore, response time in each query is very short. In this way, the user can obtain available data in short time. In addition, a current task query progress is displayed in the data query interface. This helps the user obtain a completion status of the current query task.

It should be noted that when the data query apparatus provided in the foregoing embodiments performs data query, division into the foregoing functional modules is merely used as an example for description. In actual application, the foregoing functions can be allocated to different functional modules and implemented based on a requirement, that is, an inner structure of the apparatus is divided into different functional modules to implement all or some of the functions described above. In addition, the data query apparatus provided in the foregoing embodiment and the embodiment of the data query method corresponding to FIG. 1 belong to a same concept. For a specific implementation process thereof, refer to the method embodiment. Details are not described herein again.

FIG. 10 is a diagram of a structure of another data query apparatus according to an embodiment of this application. Refer to FIG. 10. The apparatus includes an interface providing module 1001, a first task obtaining module 1002, and a first query module 1003.

The interface providing module 1001 is configured to provide a data query interface, where the data query interface is configured to obtain a query task input by a user.

The first task obtaining module 1002 is configured to obtain a content query task from the data query interface, where the content query task is used to query for target data content that meets a query condition, and the query condition includes a query word and a query time range.

The first query module 1003 is configured to perform a first query operation based on the query condition and a single query result return condition, and display, in the data query interface, first data content obtained by performing the first query operation, where the single query result return condition includes a single maximum query amount of data and a single maximum query delay, the first query operation is used to query for a part of the target data content, a query delay of the first query operation is not greater than the single maximum query delay, and an amount of data of the first data content is not greater than the single maximum query amount of data.

Optionally, the first query module 1003 includes:
a query submodule, configured to perform the first query operation based on the query condition and the single query result return condition; and
a first content display submodule, configured to: when any one of a plurality of target conditions is first met, end the first query operation, and display, in the data query interface, the first data content obtained by performing the first query operation, where the plurality of target conditions include that the query delay of the first query operation reaches the single maximum query delay, the amount of data found by performing the first query operation reaches the single maximum query amount of data, and query for the target data content has been completed through the first query operation.

Optionally, the first query module 1003 includes:
a delay determining submodule, configured to determine an estimated total query delay of the content query task;
a decomposition submodule, configured to decompose the content query task into a plurality of ordered subtasks based on the query condition, the estimated total query delay, and the single maximum query delay, where each subtask is used to query for a part of the target data content, and an estimated query delay of each subtask does not exceed the single maximum query delay;
an execution submodule, configured to execute at least one subtask to perform the first query operation; and
a second content display submodule, configured to: when any one of a plurality of target conditions is first met, end the first query operation, and display, in the data query interface, the first data content obtained by performing the first query operation, where the plurality of target conditions include that the query delay of the first query operation reaches the single maximum query delay, the amount of data of the first data content reaches the single maximum query amount of data, and a target subtask is completed, where the target subtask is a last subtask in the plurality of subtasks, or when the target subtask is completed, a sum of the query delay of the first query operation and an estimated query delay of a next subtask of the target subtask is greater than the single maximum query delay.

Optionally, the apparatus further includes:
a recording module, configured to record a pause location of the content query task;
a display module, configured to display a target query option in the data query interface, where the target query option indicates to continue to query for data content; and
a second query module, configured to perform a second query operation based on the pause location after receiving a trigger operation performed by the user on the target query option.

Optionally, the apparatus further includes:
a progress determining module, configured to determine a query progress of the content query task; and
a progress display module, configured to display the query progress of the content query task in the data query interface.

Optionally, the apparatus further includes:
a second task obtaining module, configured to obtain a context query task that is triggered by the user and that is about reference data content, where the context query task is used to query for target context data content that meets a context query condition, the context query condition includes a preceding context time range, a subsequent context time range, and a query statement, and the reference data content is any piece of data content displayed in the data query interface; and
a context query module, configured to perform a first preceding context query operation and a first subsequent context query operation based on the context query condition and the single query result return condition, and display, in the data query interface, first preceding context data content obtained by performing the first preceding context query operation and first subsequent context data content obtained by performing the first subsequent context query operation, where the first preceding context query operation and the first subsequent context query operation each are used to query for a part of the target context data content, both a query delay of the first preceding context query operation and a query delay of the first subsequent context query operation are not greater than the single maximum query delay, and both an amount of data of the first preceding context data content and an amount of data of the first subsequent context data content are not greater than the single maximum query amount of data.

Optionally, the single maximum query amount of data and/or the single maximum query delay are/is input by the user in the data query interface.

The foregoing modules may be implemented by software, or may be implemented by hardware. For example, the following uses the interface providing module as an example to describe an implementation of the interface providing module. Similarly, for an implementation of the foregoing another module, refer to the implementation of the interface providing module.

The module is used as an example of a software functional unit, and the interface providing module may include code running on a computing instance. The computing instance may include at least one of a physical host (compute device), a virtual machine, and a container. Further, there may be one or more computing instances. For example, the interface providing module may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The module is used as an example of a hardware functional unit, and the interface providing module may include at least one compute device like a server. Alternatively, the interface providing module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The plurality of compute devices included in the interface providing module may be distributed in a same region, or may be distributed in different regions. The plurality of compute devices included in the interface providing module may be distributed in a same AZ, or may be distributed in different AZs. Similarly, the plurality of compute devices included in the interface module may be distributed on a same VPC, or may be distributed on a plurality of VPCs. The plurality of compute devices may be any combination of compute devices such as a server, an ASIC, a PLD, a CPLD, an FPGA, and GAL.

In embodiments of this application, for the content query task and the context query task, the single maximum query delay is set, so that time for returning a result of each query operation can be controlled within specific duration; and the single query result return condition is set, so that the cloud platform can return a part of ordered results in a timely manner in various cases. In this way, user experience is improved. The target query option provided in the data query interface allows the user to query for more data after obtaining a current result, so as to ensure that the user can obtain needed data content. In addition, a current task query progress is displayed in the data query interface. This helps the user learn of a current query status of the content query task, and helps the user determine, based on a requirement, whether to end the content query task, to save time and reduce overheads.

It should be noted that when the data query apparatus provided in the foregoing embodiments performs data query, division into the foregoing functional modules is merely used as an example for description. In actual application, the foregoing functions can be allocated to different functional modules and implemented based on a requirement, that is, an inner structure of the apparatus is divided into different functional modules to implement all or some of the functions described above. In addition, the data query apparatus provided in the foregoing embodiment and the embodiment of the data query method corresponding to FIG. 5 belong to a same concept. For a specific implementation process thereof, refer to the method embodiment. Details are not described herein again.

An embodiment of this application further provides a compute device 1100. As shown in FIG. 11, the compute device 1100 includes a bus 1102, a processor 1104, a memory 1106, and a communication interface 1108. The processor 1104, the memory 1106, and the communication interface 1108 communicate with each other through the bus 1102. The compute device 1100 may be a server or a terminal device. It should be understood that quantities of processors and memories in the compute device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1102 may include a path for transferring information between components (for example, the memory 1106, the processor 1104, and the communication interface 1108) of the compute device 1100.

The processor 1104 may include any one or more of processors, for example, a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1106 stores executable program code, and the processor 1104 executes the executable program code to separately implement functions of modules in the at least one data query apparatus, so as to implement the data query method corresponding to FIG. 1 and/or FIG. 5. In other words, the memory 1106 stores instructions used to perform the data query method corresponding to FIG. 1 and/or FIG. 5.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

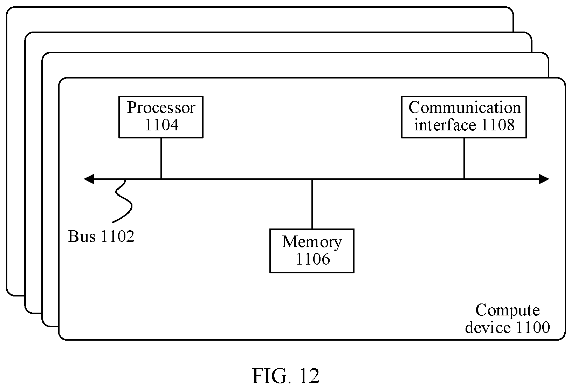

As shown in FIG. 12, the compute device cluster includes at least one compute device 1100. A memory 1106 in one or more compute devices 1100 in the compute device cluster may store same instructions for performing the data query method corresponding to FIG. 1 and/or FIG. 5.

In some possible implementations, the memory 1106 in the one or more compute devices 1100 in the compute device cluster may store a part of instructions for performing the data query method corresponding to FIG. 1 and/or FIG. 5. In other words, a combination of the one or more compute devices 1100 may jointly execute the instructions for performing the data query method corresponding to FIG. 1 and/or FIG. 5.

It should be noted that instructions stored in memories 1106 in different compute devices 1100 in the compute device cluster may implement functions of one or more of the modules in the at least one data query apparatus.

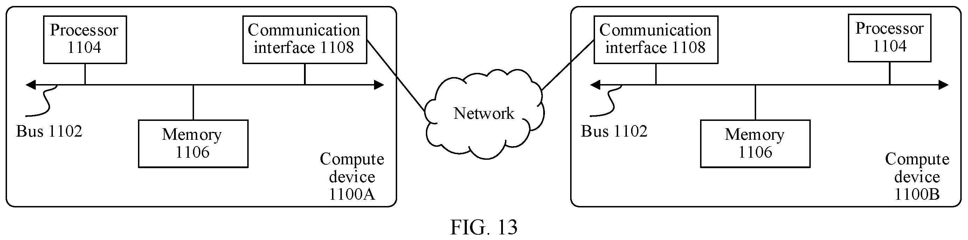

In some possible implementations, the one or more compute devices in the compute device cluster may be connected through a network. The network may be a wide area network, a local area network, or the like. FIG. 13 shows a possible implementation. As shown in FIG. 13, two compute devices 1100A and 1100B are connected through a network. Specifically, each compute device is connected to the network through a communication interface in the compute device. In this possible implementation, a memory 1106 in the compute device 1100A stores instructions for performing a function of a part of modules in the at least one data query apparatus. In addition, a memory 1106 in the compute device 1100B stores instructions for performing a function of another part of modules in the at least one data query apparatus.

It should be understood that functions of the compute device 1100A shown in FIG. 13 may alternatively be completed by a plurality of compute devices 1100. Similarly, functions of the compute device 1100B may alternatively be implemented by a plurality of compute devices 1100.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the data query method corresponding to FIG. 1 and/or FIG. 5.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the data query method corresponding to FIG. 1 and/or FIG. 5.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A data query method, wherein the method comprises:
providing a data query interface, wherein the data query interface is configured to obtain a query task input by a user;
obtaining an aggregation query task from the data query interface, wherein the aggregation query task is used to query for a total amount of data that meets a query condition, and the query condition comprises a query word and a query time range; and
displaying a first estimated query result of the aggregation query task in the data query interface, wherein the first estimated query result comprises a first total amount of data that meets the query condition and that is obtained through approximate estimation based on a first partial exact query result, the first partial exact query result comprises an amount of data that is found from M data blocks and that meets the query condition, the M data blocks are sampled from N data blocks that match the aggregation query task, M and N are integers, and M is less than N.

2. The method according to claim 1, wherein before the displaying the first estimated query result of the aggregation query task in the data query interface, the method further comprises:
displaying a second estimated query result of the aggregation query task in the data query interface, wherein the second estimated query result comprises a second total amount of data that meets the query condition and that is obtained through approximate estimation based on a second partial exact query result, the second partial exact query result comprises an amount of data that is found from P data blocks and that meets the query condition, the P data blocks are sampled from the N data blocks that match the aggregation query task, and the M data blocks comprise the P data blocks; and
the displaying the first estimated query result of the aggregation query task in the data query interface comprises:
replacing the second estimated query result with the first estimated query result in the data query interface.

3. The method according to claim 2, wherein before the replacing the second estimated query result with the first estimated query result in the data query interface, the method further comprises:
determining a newly added sampled data block;
querying the newly added sampled data block based on the query condition, to determine a newly added query result, wherein the newly added query result comprises an amount of data that is found from the newly added sampled data block and that meets the query condition; and
determining the first partial exact query result based on the newly added query result and the second partial exact query result.

4. The method according to any one of claims 1 to 3, wherein the method further comprises:
displaying a complete exact query result of the aggregation query task in the data query interface, wherein the complete exact query result comprises a total amount of data that is found from the N data blocks and that meets the query condition.

5. The method according to any one of claims 1 to 4, wherein the first estimated query result further comprises a first data statistics chart, and the first data statistics chart indicates distribution of the first total amount of data in different time intervals.

6. The method according to any one of claims 1 to 5, wherein the method further comprises:
displaying a query progress of the aggregation query task in the data query interface.

7. The method according to any one of claims 1 to 6, wherein the method further comprises:
determining, from a target database based on the query condition and an index directory of the target database, the N data blocks that match the aggregation query task.

8. A data query method, wherein the method comprises:
providing a data query interface, wherein the data query interface is configured to obtain a query task input by a user;
obtaining a content query task from the data query interface, wherein the content query task is used to query for target data content that meets a query condition, and the query condition comprises a query word and a query time range; and
performing a first query operation based on the query condition and a single query result return condition, and displaying, in the data query interface, first data content obtained by performing the first query operation, wherein the single query result return condition comprises a single maximum query amount of data and a single maximum query delay, the first query operation is used to query for a part of the target data content, a query delay of the first query operation is not greater than the single maximum query delay, and an amount of data of the first data content is not greater than the single maximum query amount of data.

9. The method according to claim 8, wherein the performing the first query operation based on the query condition and the single query result return condition, and displaying, in the data query interface, the first data content obtained by performing the first query operation comprises:
performing the first query operation based on the query condition and the single query result return condition; and
when any one of a plurality of target conditions is first met, ending the first query operation, and displaying, in the data query interface, the first data content obtained by performing the first query operation, wherein the plurality of target conditions comprise that the query delay of the first query operation reaches the single maximum query delay, the amount of data found by performing the first query operation reaches the single maximum query amount of data, and query for the target data content has been completed through the first query operation.

10. The method according to claim 8, wherein the performing the first query operation based on the query condition and the single query result return condition, and displaying, in the data query interface, the first data content obtained by performing the first query operation comprises:
determining an estimated total query delay of the content query task;
decomposing the content query task into a plurality of ordered subtasks based on the query condition, the estimated total query delay, and the single maximum query delay, wherein each subtask is used to query for a part of the target data content, and an estimated query delay of each subtask does not exceed the single maximum query delay;
executing at least one subtask to perform the first query operation; and
when any one of a plurality of target conditions is first met, ending the first query operation, and displaying, in the data query interface, the first data content obtained by performing the first query operation, wherein the plurality of target conditions comprise that the query delay of the first query operation reaches the single maximum query delay, the amount of data of the first data content reaches the single maximum query amount of data, and a target subtask is completed, wherein the target subtask is a last subtask in the plurality of subtasks, or when the target subtask is completed, a sum of the query delay of the first query operation and an estimated query delay of a next subtask of the target subtask is greater than the single maximum query delay.

11. The method according to any one of claims 8 to 10, wherein after the first query operation is ended, the method further comprises:
recording a pause location of the content query task;
displaying a target query option in the data query interface, wherein the target query option indicates to continue to query for data content; and
performing a second query operation based on the pause location after receiving a trigger operation performed by the user on the target query option.

12. The method according to any one of claims 8 to 11, wherein after the first query operation is ended, the method further comprises:
determining a query progress of the content query task; and
displaying the query progress of the content query task in the data query interface.

13. The method according to any one of claims 8 to 12, wherein the method further comprises:
obtaining a context query task that is triggered by the user and that is about reference data content, wherein the context query task is used to query for target context data content that meets a context query condition, the context query condition comprises a preceding context time range, a subsequent context time range, and a query statement, and the reference data content is any piece of data content displayed in the data query interface; and
performing a first preceding context query operation and a first subsequent context query operation based on the context query condition and the single query result return condition, and displaying, in the data query interface, first preceding context data content obtained by performing the first preceding context query operation and first subsequent context data content obtained by performing the first subsequent context query operation, wherein the first preceding context query operation and the first subsequent context query operation each are used to query for a part of the target context data content, both a query delay of the first preceding context query operation and a query delay of the first subsequent context query operation are not greater than the single maximum query delay, and both an amount of data of the first preceding context data content and an amount of data of the first subsequent context data content are not greater than the single maximum query amount of data.

14. The method according to any one of claims 8 to 13, wherein the single maximum query amount of data and/or the single maximum query delay are/is input by the user in the data query interface.

15. A data query apparatus, wherein the apparatus comprises:
an interface providing module, configured to provide a data query interface, wherein the data query interface is configured to obtain a query task input by a user;
a task obtaining module, configured to obtain an aggregation query task from the data query interface, wherein the aggregation query task is used to query for a total amount of data that meets a query condition, and the query condition comprises a query word and a query time range; and
a first result display module, configured to display a first estimated query result of the aggregation query task in the data query interface, wherein the first estimated query result comprises a first total amount of data that meets the query condition and that is obtained through approximate estimation based on a first partial exact query result, the first partial exact query result comprises an amount of data that is found from M data blocks and that meets the query condition, the M data blocks are sampled from N data blocks that match the aggregation query task, M and N are integers, and M is less than N.

16. The apparatus according to claim 15, wherein the apparatus further comprises:
a second result display module, configured to display a second estimated query result of the aggregation query task in the data query interface, wherein the second estimated query result comprises a second total amount of data that meets the query condition and that is obtained through approximate estimation based on a second partial exact query result, the second partial exact query result comprises an amount of data that is found from P data blocks and that meets the query condition, the P data blocks are sampled from the N data blocks that match the aggregation query task, and the M data blocks comprise the P data blocks; and
the first result display module is specifically configured to:
replace the second estimated query result with the first estimated query result in the data query interface.

17. The apparatus according to claim 16, wherein the apparatus further comprises:
a first determining module, configured to determine a newly added sampled data block;
a query module, configured to query the newly added sampled data block based on the query condition, to determine a newly added query result, wherein the newly added query result comprises an amount of data that is found from the newly added sampled data block and that meets the query condition; and
a second determining module, configured to determine the first partial exact query result based on the newly added query result and the second partial exact query result.

18. The apparatus according to any one of claims 15 to 17, wherein the apparatus further comprises:
a complete result display module, configured to display a complete exact query result of the aggregation query task in the data query interface, wherein the complete exact query result comprises a total amount of data that is found from the N data blocks and that meets the query condition.

19. The apparatus according to any one of claims 15 to 18, wherein the first estimated query result further comprises a first data statistics chart, and the first data statistics chart indicates distribution of the first total amount of data in different time intervals.

20. The apparatus according to any one of claims 15 to 19, wherein the apparatus further comprises:
a progress display module, configured to display a query progress of the aggregation query task in the data query interface.

21. The apparatus according to any one of claims 15 to 20, wherein the apparatus further comprises:
a third determining module, configured to determine, from a target database based on the query condition and an index directory of the target database, the N data blocks that match the aggregation query task.

22. A data query apparatus, wherein the apparatus comprises:
an interface providing module, configured to provide a data query interface, wherein the data query interface is configured to obtain a query task input by a user;
a first task obtaining module, configured to obtain a content query task from the data query interface, wherein the content query task is used to query for target data content that meets a query condition, and the query condition comprises a query word and a query time range; and
a first query module, configured to perform a first query operation based on the query condition and a single query result return condition, and display, in the data query interface, first data content obtained by performing the first query operation, wherein the single query result return condition comprises a single maximum query amount of data and a single maximum query delay, the first query operation is used to query for a part of the target data content, a query delay of the first query operation is not greater than the single maximum query delay, and an amount of data of the first data content is not greater than the single maximum query amount of data.

23. The apparatus according to claim 22, wherein the first query module comprises:
a query submodule, configured to perform the first query operation based on the query condition and the single query result return condition; and
a first content display submodule, configured to: when any one of a plurality of target conditions is first met, end the first query operation, and display, in the data query interface, the first data content obtained by performing the first query operation, wherein the plurality of target conditions comprise that the query delay of the first query operation reaches the single maximum query delay, the amount of data found by performing the first query operation reaches the single maximum query amount of data, and query for the target data content has been completed through the first query operation.

24. The apparatus according to claim 22, wherein the first query module comprises:
a delay determining submodule, configured to determine an estimated total query delay of the content query task;
a decomposition submodule, configured to decompose the content query task into a plurality of ordered subtasks based on the query condition, the estimated total query delay, and the single maximum query delay, wherein each subtask is used to query for a part of the target data content, and an estimated query delay of each subtask does not exceed the single maximum query delay;
an execution submodule, configured to execute at least one subtask to perform the first query operation; and
a second content display submodule, configured to: when any one of a plurality of target conditions is first met, end the first query operation, and display, in the data query interface, the first data content obtained by performing the first query operation, wherein the plurality of target conditions comprise that the query delay of the first query operation reaches the single maximum query delay, the amount of data of the first data content reaches the single maximum query amount of data, and a target subtask is completed, wherein the target subtask is a last subtask in the plurality of subtasks, or when the target subtask is completed, a sum of the query delay of the first query operation and an estimated query delay of a next subtask of the target subtask is greater than the single maximum query delay.

25. The apparatus according to any one of claims 22 to 24, wherein the apparatus further comprises:
a recording module, configured to record a pause location of the content query task;
a display module, configured to display a target query option in the data query interface, wherein the target query option indicates to continue to query for data content; and
a second query module, configured to perform a second query operation based on the pause location after receiving a trigger operation performed by the user on the target query option.

26. The apparatus according to any one of claims 22 to 25, wherein the apparatus further comprises:
a progress determining module, configured to determine a query progress of the content query task; and
a progress display module, configured to display the query progress of the content query task in the data query interface.

27. The apparatus according to any one of claims 22 to 26, wherein the apparatus further comprises:
a second task obtaining module, configured to obtain a context query task that is triggered by the user and that is about reference data content, wherein the context query task is used to query for target context data content that meets a context query condition, the context query condition comprises a preceding context time range, a subsequent context time range, and a query statement, and the reference data content is any piece of data content displayed in the data query interface; and
a context query module, configured to perform a first preceding context query operation and a first subsequent context query operation based on the context query condition and the single query result return condition, and display, in the data query interface, first preceding context data content obtained by performing the first preceding context query operation and first subsequent context data content obtained by performing the first subsequent context query operation, wherein the first preceding context query operation and the first subsequent context query operation each are used to query for a part of the target context data content, both a query delay of the first preceding context query operation and a query delay of the first subsequent context query operation are not greater than the single maximum query delay, and both an amount of data of the first preceding context data content and an amount of data of the first subsequent context data content are not greater than the single maximum query amount of data.

28. The apparatus according to any one of claims 22 to 27, wherein the single maximum query amount of data and/or the single maximum query delay are/is input by the user in the data query interface.

29. A compute device cluster, comprising at least one compute device, wherein each compute device comprises a processor and a memory; and
the processor of the at least one compute device is configured to execute instructions stored in the memory of the at least one compute device, to cause the compute device cluster to perform the method according to any one of claims 1 to 7.

30. A computer-readable storage medium, wherein the storage medium stores instructions, and when the instructions are executed by a compute device cluster, the compute device cluster performs the method according to any one of claims 1 to 7.

31. A computer program product comprising instructions, wherein when the instructions are run by a compute device cluster, the compute device cluster is caused to perform the method according to any one of claims 1 to 7.

32. A compute device cluster, comprising at least one compute device, wherein each compute device comprises a processor and a memory; and
the processor of the at least one compute device is configured to execute instructions stored in the memory of the at least one compute device, to cause the compute device cluster to perform the method according to any one of claims 8 to 14.

33. A computer-readable storage medium, wherein the storage medium stores instructions, and when the instructions are executed by a compute device cluster, the compute device cluster performs the method according to any one of claims 8 to 14.

34. A computer program product comprising instructions, wherein when the instructions are run by a compute device cluster, the compute device cluster is caused to perform the method according to any one of claims 8 to 14.
